(19) **Europäisches Patentamt / European Patent Office / Office européen des brevets**

(11) **EP 2 010 885 B1**

(12) **EUROPEAN PATENT SPECIFICATION**

(45) Date of publication and mention
of the grant of the patent:
**03.06.2020 Bulletin 2020/23**

(21) Application number: **07735426.4**

(22) Date of filing: **09.04.2007**

(51) Int Cl.:
*G01M 11/02* (2006.01)  *G03H 1/00* (2006.01)

(86) International application number:
**PCT/IB2007/051257**

(87) International publication number:
**WO 2007/116365 (18.10.2007 Gazette 2007/42)**

(54) **METHOD AND APPARATUS TO MEASURE AND COMPUTE THE AMPLITUDE POINT SPREAD FUNCTION AND ASSOCIATED PARAMETERS OF A COHERENT OPTICAL IMAGING SYSTEM**

VERFAHREN UND VORRICHTUNG ZUR MESSUNG UND BERECHNUNG DER AMPLITUDENPUNKT-SPREIZFUNKTION UND ASSOZIIERTER PARAMETER EINES KOHÄRENTEN OPTISCHEN ABBILDUNGSSYSSTEMS

PROCÉDÉ ET APPAREIL PERMETTANT DE MESURER ET CALCULER LA FONCTION D'ÉTALEMENT DE POINTS D'AMPLITUDE ET DES PARAMÈTRES ASSOCIÉS D'UN SYSTÈME D'IMAGERIE OPTIQUE COHÉRENT

(84) Designated Contracting States:
**AT BE BG CH CY CZ DE DK EE ES FI FR GB GR HU IE IS IT LI LT LU LV MC MT NL PL PT RO SE SI SK TR**

(30) Priority: **07.04.2006 PCT/IB2006/051077**

(43) Date of publication of application:
**07.01.2009 Bulletin 2009/02**

(73) Proprietor: **Ecole Polytechnique Fédérale de Lausanne**
**1015 Lausanne (CH)**

(72) Inventors:
- **DEPEURSINGE, Christian**
  **CH-1028 Préverenges (CH)**
- **CHARRIERE, Florian**
  **CH-1005 Lausanne (CH)**
- **COLOMB, Tristan**
  **CH-1920 Martigny (CH)**
- **MARIAN, Mihaela, Anca**
  **Sherbrook, QC J1K 1J8 (CA)**
- **MARQUET, Pierre**
  **CH-1033 Cheseaux-sur-Lausanne (CH)**

(74) Representative: **Grosfillier, Philippe**
**ANDRE ROLAND SA**
**Chemin des Charmettes 9**
**P.O. Box 5107**
**1002 Lausanne (CH)**

(56) References cited:
**US-B1- 6 262 818**

- **MARIAN A ET AL: "Point spread function model for microscopic image deconvolution in digital holographic microscopy" PROCEEDINGS OF THE SPIE - THE INTERNATIONAL SOCIETY FOR OPTICAL ENGINEERING SPIE-INT. SOC. OPT. ENG USA, vol. 5143, no. 1, 2003, pages 202-209, XP002456583 ISSN: 0277-786X**
- **CAI ET AL: "Virtual shearing interferometry by digital holography" OPTICS COMMUNICATIONS, NORTH-HOLLAND PUBLISHING CO. AMSTERDAM, NL, vol. 259, no. 1, 1 March 2006 (2006-03-01), pages 64-69, XP005251323 ISSN: 0030-4018**
- **STADELMAIER A ET AL: "Compensation of lens aberrations in digital holography" OPTICS LETTERS, OSA, OPTICAL SOCIETY OF AMERICA, WASHINGTON, DC, US, vol. 25, no. 22, 2000, pages 1630-1632, XP002388510 ISSN: 0146-9592 cited in the application**
- **MARIAN ANCA ET AL: "Point spread function models for digital holographic microscopy" PROGR. BIOMED. OPT. IMAGING; PROGRESS IN BIOMEDICAL OPTICS AND IMAGING; THREE-DIMENSIONAL AND MULTIDIMENSIONAL MICROSCOPY: IMAGE ACQUISITION AND PROCESSING XI 2004, vol. 5, no. 13, 2004, pages 134-144, XP002456584**

EP 2 010 885 B1

- COLOMB T ET AL: "Polarization imaging by use of digital holography" APPLIED OPTICS OPT. SOC. AMERICA USA, vol. 41, no. 1, 1 January 2002 (2002-01-01), pages 27-37, XP002456585 ISSN: 0003-6935 cited in the application
- COLOMB T ET AL: "AUTOMATIC PROCEDURE FOR ABERRATION COMPENSATION IN DIGITAL HOLOGRAPHIC MICROSCOPY AND APPLICATIONS TO SPECIMEN SHAPE COMPENSATION" APPLIED OPTICS, OSA, OPTICAL SOCIETY OF AMERICA, WASHINGTON, DC, US, vol. 45, no. 5, 10 February 2006 (2006-02-10), pages 851-863, XP001239176 ISSN: 0003-6935 cited in the application
- NICOLA DE S ET AL: "RECOVERING CORRECT PHASE INFORMATION IN MULTIWAVELENGTH DIGITAL HOLOGRAPHIC MICROSCOPY BY COMPENSATION FOR CHROMATIC ABERRATIONS" OPTICS LETTERS, OSA, OPTICAL SOCIETY OF AMERICA, WASHINGTON, DC, US, vol. 30, no. 20, 15 October 2005 (2005-10-15), pages 2706-2708, XP001235391 ISSN: 0146-9592 cited in the application
- WOODFORD P ET AL: "The Synthetic Aperture Microscope, Experimental Results" PROCEEDINGS OF THE SPIE, SPIE, BELLINGHAM, VA, US, vol. 2751, 8 April 1996 (1996-04-08), pages 230-240, XP002109571 ISSN: 0277-786X
- Joachim Heil ET AL: "Artificial Star Test by Real-Time Video Holography for the Adjustment of High-numerical-aperture Micro-Objectives", Applied Optics, vol. 42, no. 25, 1 January 2003 (2003-01-01), page 5073, XP055157773, ISSN: 0003-6935, DOI: 10.1364/AO.42.005073
- BEVERAGE J L ET AL: "Measurement of the three-dimensional microscope point spread function using a Shack-Hartmann wavefront sensor", JOURNAL OF MICROSCOPY, BLACKWELL SCIENCE, GB, vol. 205, no. PART 1, 1 January 2002 (2002-01-01), pages 61-75, XP002532466, ISSN: 0022-2720, DOI: 10.1046/J.0022-2720.2001.00973.X

## Description

### Field of the invention

The present invention relates to optical imaging systems and more precisely to apparatuses and methods for characterizing the images obtained by such systems.

### State of the art

The concept of Point Spread Functions (PSF) is widely used to characterize the three-dimensional imaging capabilities of an imaging system. Usually, attention is paid only to the intensity point spread function, while the phase point spread function behavior is neglected due to the fact that the phase information is lost during the image acquisition. However, it is believed that the phase information plays an essential role in the full aberration characterization and compensation in Optical Imaging Systems (OIS). In the PSF approach the object is decomposed into infinitesimal point sources and the image is determined as the superposition of the field distribution corresponding to each point source. The complex field distribution, corresponding to the image of such a point source further designated by the Point Object (PO), is defined as the Amplitude Point Spread Function (APSF) of the OIS, whose modulus squared gives the intensity or irradiance point spread function (IPSF) and whose phase gives respectively what will be defined as the phase point spread function (PPSF). Usually, attention was paid mainly on the IPSF commonly used to characterize the performances of incoherent imaging systems, but the relevance of the phase has grown up with the development of coherent imaging techniques, providing phase sensitive microscopy techniques such as interferometric techniques: Mach-Zehnder, white-light and Linnick interferometers, or, more recently Digital Holographic Microscopy (DHM). In coherent imaging techniques, the so-called Coherent Transfert Function (CTF) which is in fact the Fourier transform of the APSF is used, but with the appearing of DHM, the APSF is called to play an increasing role. Several works have shown how to compensate for the various types of phase aberrations affecting coherent optical systems. More generally, one can summarize that the consideration of phase or more generally PPSF offers new opportunities in deconvolution problems, where ambiguity removal is still to be solved.

Theoretical analysis of imaging systems PSF have been widely and systematically conducted, and nowadays each microscope user can benefit from the developments they generated, from the perfectly designed actual microscope objectives to the most recent deconvolution algorithms or images-enhancing techniques. The role of the phase in optical system analysis is much more recent and has been evidenced in few works up to now. The review of prior art is presented in two strands: one strand deals with calculation of IPSF or APSF from expressions derived from diffraction theory and in the second strand, the experimental studies and the proposed methods are reviewed.

### Calculation of IPSF or APSF from expressions derived from diffraction theory

The theoretical models used to calculate the PSF of a lens are essentially based on diffraction theory and many integral expressions were developed to compute the wave field in the 3D diffraction pattern generated when a spherical wave impinges on a circular aperture. A comprehensive review of the most important formulations based on diffraction theory have been given by Gibson (Gibson & Lanni, 1989), including models developed in the frame of the scalar wave theory and paraxial approximation, both .for on-axis and off-axis point sources. Vectorial models based on the electro-magnetic field theory were also developed (Wolf, 1959; Richards & Wolf, 1959; Kant, 1993; Mansuripur, 1989, Min Gu,1999), but emphasis has been put mainly on the intensity distribution and the phase was generally not considered. Linfoot and Wolf (Linfoot & Wolf, 1956) gave a first detailed description of the 3D phase distribution near focus of an aberration-free lens, by using the Lommel's functions to evaluate the diffraction integral. Based on the scalar diffraction theory, Farnell (Farnell, 1957) calculated the phase in the focal region of a microwave lens and verified also his predictions by experimental measurements (Farnell, 1958). A more efficient way to calculate the intensity and phase distributions near focus was offered later by the recourse to the Fast Fourier Transform (FFT) algorithm. This was applied in the paraxial Fresnel approximation where the diffraction integral can be viewed as a Fourier transform of the pupil function (Mills & Thompson, 1986; Selligson, 1981; Marian, *et al.,* 2003).

### Interest of IPSF and APSF for the correction of aberrations

An optical system can hardly be totally aberration-free. Even if primary optical aberrations are well corrected, as in a high quality and expensive microscope objectives, aberrations can still appear from misalignment or slight imperfections of the optics and also from its inappropriate use in non-designed conditions (incorrect coverslip thickness, coverslip refractive index or immersion oil refractive index) or even from the specimen under investigation, generally because focusing media refractive index mismatch. The general problem of aberrations was addressed by many authors (Born & Wolf, 1980; Mahajan, 1991; Mahajan, 1991), sometimes with special emphasis on microscope objectives (Benford, 1965; Keller, 1990). Specific aberrations that appear when a microscope objective is used under inappropriate conditions were analyzed in details by Gibson (Gibson & Lanni, 1991; Gibson, 1990) who proposed a simple model, based on the scalar diffraction theory and geometrical optics calculations, in order to quantify the importance of these types of aberrations. The same problem, i.e. focusing through dielectric interfaces with different thicknesses and refractive indices, was treated in a general context by Török (Török & Varga, 1995; Török & Varga, 1997; Török, 1999) who developed a rigorous model based on the vectorial theory. Recently, Haeberlé combined the Gibson and the Török models and have formulated an accurate and easy-to-use expression, to be used both in conventional (Haeberle, 2003) and confocal microscopy (Haeberle, 2004). All these papers treat only the aberrated IPSF and only few works exist which report phase data for OIS suffering from primary aberrations, for low and moderate NA OIS (Mills & Thompson, 1986; Selligson, 1981) and for high NA (Braat, 2002,2003,2005; Janssen,2002,Dirksen,2003).

One should remark that several studies are model free, i.e.. they are not based on theoretical analysis , but take into account the experimental data on phase aberrations (see for example Colomb *et al.* 2006). The compensation of: quadratic wavefront aberration, normally introduced by a lens or microscope objective, has been shown to be eliminated by numerical processing of the wavefront (Cuche *et al.* 1999, Pedrini *et al.* 2001), similarly, spherical aberration (Stadelmaier & Massig 2000), chromatic aberration (De Nicola, S. *et al.* 2005), astigmatism (De Nicola. *et al.* 2002, Grilli *et al.* 2001) or anamorphism (De Nicola *et al.* 2001, De Nicola *et al.* 2005).can be eliminated by numerical compensation.

Concerning the role of phase in microscopy, a review of the works yields the following journal articles: Hanser *et al.* have recently demonstrated the efficiency of the information brought by the theoretical consideration of phase, by characterizing a wide-field fluorescence microscope through its phase-retrieved pupil functions based on intensity measurement (Hanser *et al.* 2004, Braat). Walford *et al.* (Walford *et al.* 2002) or Dändliker *et al.* (Dändliker *et al.* 2004), in their respective measurement of the phase distribution in the beam diffracted by a lens, have shown how to use the phase singularities (characterized in a 2D representation, by a phase change of $\pm\pi$ on a closed path around the singularity: $\int d\varphi = +2\pi$) can play a role in the identification of aberrations, through the study of their 3D localization.

## Method and apparatus for PSF measurement

Usually the PSF is measured by acquiring images of small fluorescent beads with diameter under the instrument resolution limit (Hiraoka *et al.,* 1987; Agard *et al.,* 1989; Hiraoka & Sedat, 1990; Gibson & Lanni, 1991; Shaw & Rawlins, 1991; McNally *et al.,* 1994; Kontoyannis & Lanni, 1996; Haeberlé *et al.,* 2001). It was suggested that this diameter should be less than 30% of the diameter of the first dark ring of the in-focus 2D PSF (Preza *et al.,* 1992). This method was successfully applied, for the measurement of the axial PSF intended to be used in deconvolution and optical sectioning microscopy (Agard, 1984; Gibson & Lanni, 1990; McNally *et al.,* 1999; Wallace *et al.,* 2001). The main drawback of this experimentally measured PSF is the low signal-to-noise ratio resulting mainly from the shot noise due to the low intensity signal provided by such small objects. An Airy pattern was also proposed as test object for measuring the PSF (Castaneda & Kross, 1994), taking advantage of its relatively easy generation and positioning. On the other hand, the PSF is measured on a separate setup, under non-designed optical conditions of the microscope, which can be quite different from the experimental imaging conditions. To overcome this problem a new method was recently proposed, which attempts to extract the PSF directly from the specimen images themselves, by exploiting the presence of small structures within the samples (de Monvel, 2003). In addition to the required presence of small and isolated structure in the sample, the accuracy of the method decreases under deep specimen imaging conditions.

Anyway, all these measurements only take into account the IPSF, neglecting the phase, which can play an essential role for example in quantifying the aberrations present in the system to completely characterize a OIS: lens or microscope objective (MO). In phase sensitive microscopy techniques, including digital holographic microscopy (DHM) (Cuche *et al.,* 1999; Cuche, 2000), the knowledge of the PPSF could significantly improve the quantitative phase image quality. Selligson (Selligson, 1981) proposed in 1981 already, a method based on a Mach-Zender interferometer, allowing to measure the IPSF and phase of lenses subjected to classical aberrations. However, his method requires a point-to-point scan of the focal region and was quite slow at that time, taking up to 20 minutes for a grid of 32x32 points and therefore needing a carefully stabilized measuring system. Schrader (Schrader & Hell, 1996), Juskaitis (Juskaitis & Wilson, 1998; Juskaitis, 2003) and Walford (Walford *et al.* 2002) also proposed to record an interference image of a point object, but several images are necessary to reach this goal and a 3D-scan of the focal region is also required. Another approach consists in evaluating the complex wavefront at the exit pupil of the MO: Beverage used a Shack-Hartmann wavefront sensor to directly measure the pupil function combined with a Fourier transform calculus to recover its PSF (Beverage *et al.,* 2002), Török used a Twyman-Green interferometer for measurement and the Debye-Wolf diffraction theory to predict the complex APSF (Török & Fu-Jen, 2002) and Hanser obtained the complex pupil function from defocused IPSF images of sub-resolution beads with a phase-retrieval algorithm. It is also possible to retrieve the phase from intensity measurements only, for systems with special symmetry (Larkin & Sheppard, 1999). Dändliker *et al.* (Dändliker et al. 2004) (Van der Avoort,2005) measured the APSF of a microlens with a Mach-Zehnder interferometer modified to obtain high spatial accuracy. The microlens is illuminated by a plane wave and moved 3-dimensionnaly is the system to record the 3D APSF, requiring therefore no sub-resolution object.

**General description of the invention**

The present invention concerns an apparatus according to claim 1 and a method according to claim 2. The concept of Point Spread Function is well known in all the litterature concerning imaging performance and image quality in general. Applied to coherent imaging systems which restore the true wave front emanating from the object, the appropriate concept is what some people have called the Amplitude Point Spread Function (APSF) where the useful signal for imaging is the electromagnetic field of the light beam, and more exactly its complex amplitude A. Very few references have cited this APSF concept: we must mention a paper of GS Waldman et al. in 1995 (Waldman GS, 1995), never cited, and later on, textbook of Min Gu in year 2000. If this simple concept has remained practically unused, that is mainly because no instrument has permitted to measure it experimentally, even if the concept appears very easy. On the contrary, the concept of Coherent Transfert Function, CTF or AOTF (Amplitude Transfert Function), which is just the Fourier transform of the APSF is more common in the literature concerning coherent imaging. The situation has changed recently, when DHM (Digital Holographic Microscopy), a new imaging modality on the market, has appeared as a practical alternative to interferometry which does not provide easily a direct image of an object. Henceforth, by the recourse to DHM makes straightforward to image a point object. However the technology is not that easy and its application to imaging nano-scale objects is still to be developed. The method and instrument disclosed is novel in the sense that, for the first time it allows measuring the true performance of an optical imaging system operating in the nano-scale range by means of a specially designed optical setup making use of ultra-high magnifications, and mastering the phase data with a very high accuracy. The concept of APSF tensor is a concept newly introduced by us which appears as very promising in the context of ultra high NA microscopy.

The concept and realization of a method or methods and associated apparatus or instruments, are hereby disclosed, which are capable of measuring the 3D complex Amplitude Point Spread Function (APSF) of a first-degree Optical Imaging System (IOS), like a simple or complex lens system or a microscope objective (MO) or other more complex optical systems OIS. The method is derived from the early works on digital holography (Cuche & Depeursinge, Patent Application WO2000/20929) (Cuche *et al.,* 1999), and more particularly on Digital Holographic Microscopy (DHM), where a microscope objective is inserted in the object arm of an off-axis holographic setup (Cuche *et al.,* 1999; Cuche, 2000). The DHM allows measuring the transverse APSF in the transverse direction, i.e. in the *xy* plane perpendicular to the optical axis *z* from a single recorded hologram, while at least 3 images are required with a common phase-shifting techniques. Moreover, the wavefront can be propagated according to a numerical diffraction model , which allows to predict the full 3D APSF from a single hologram by changing the reconstruction distance.

A plurality of methods and associated apparatus based on a common approach involving a Wavefront Sensing Device (WSD) based on Digital Holography is hereby disclosed: they provide means for the measurement of the APSF and basically consist in acquiring the 3D complex amplitude wavefront corresponding to the electromagnetic field of the beam delivered by an Optical Imaging System (OIS). The wavefront is considered as a scalar or vectorial concept.

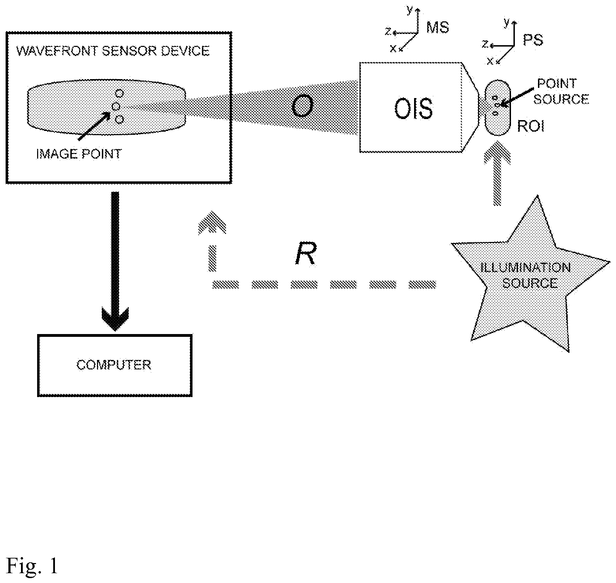

Basically, an instrument is disclosed which is capable of performing the APSF measurement and which includes an illumination source, a point object PO, the image of which is formed by the Optical Imaging System (OIS) and further transmitted to a Wavefront Sensing Device (WSD), which delivers the digital wavefront data to a computer which computes the APSF (see Fig.1.).

The computer also provides a measurement of the AOTF or CTF which are given by the complex Fourier transformation of the APSF.

In the present description, the embodiments and drawings are not all claimed, some are included to help understanding the context of the invention which is defined in the appended claims. Any embodiment which does not fall within the scope of the claims does not form part of the invention, but rather represent background art (illustrative example) that is useful for understanding the invention

Several embodiments are disclosed for the implementation of the basic method for measuring the APSF :

- In a first, generic, embodiment, the WSD can be realized by means of a Mach-Zehnder interferometer where the combination of the object beam including the point object and the Optical Imaging System on one side, and of the reference beam on the other side, provides an hologram which can be acquired with a digital camera (CCD1) and transmitted to a computer for wavefront reconstruction. Processing the hologram to reconstruct the wavefront at a variable distance d from the hologram is achieved by the methods of digital holography. This procedure yields the wavefront in a plurality of sections of space perpendicular to the optical axis.
- In an embodiment of the invention, the beam splitter and hologram plane, are placed preferentially close to the output pupil of the OIS. The camera captures the hologram formed at the output pupil by a combination with a reference wave to ensure the reconstruction of the correct wavefield at the output pupil. Processing the hologram yields the wavefront which is fitted with Zernike polynomials and applied to the determination of the aberration function,

and aberration coefficients. The extracted coefficients and the corresponding aberrations are introduced in a scalar model of diffraction in order to calculate the propagated field in the focal region and therefore the 3D APSF of the OIS.

- In another embodiment, the hologram is taken preferentially proximally to the PO image. The camera is placed far enough from the OIS to achieve high magnification factors, so that the camera can over-sample the image of the PO. This condition is required to achieve a very precise and highly resolved APSF estimation. The z scan of the wavefront obtained by changing numerically the reconstruction distance yields a highly resolved 3D APSF.

- In another embodiment, the apparatus includes a second camera (CCD2), which permit to combine the two advantages claimed for the last two embodiments. The combination of the two reconstructions from proximal and distal holograms yields a complete and extremely precise characterization of the PO image wavefront: 3D APSF is characterized precisely both in the spatial and spatial frequency domain.

- In another embodiment, the second camera is used for alignment purposes: the OIS needs to be carefully aligned on the optical axis defined by the z-scanning direction of the PO and the position the CCD1 to assure a correct characterization of the OIS, without external influences originating from the setup

- In another embodiment, the second camera CCD2 is also used to provide a phase reference: non negligible phase variations between the object beam and reference beam may arise mainly from the illumination source to the point object, because the path from the illumination source to the point object may include vibration, strain or temperature sensitive optical elements like optical fibers. The hologram acquired yields an averaged phase that can be considered as the "zero" phase. Henceforth the phase variations observed during the z-scan are imputable to diffraction image in the focal region.

- In another example, an off-axis geometry was used on both CCD's, which means that **O** and **R** impinge on the hologram plane with different angles, so that the angle between **O** and **R** could be chosen in order to obtain fringes correctly sampled by the camera.

- In another example, the polarization state of the wavefront is analyzed in the WSD, according to the basic concept of the method hereby disclosed. This goal can be achieved very elegantly, practically without doubling the equipment of the apparatus, by having the recourse to a double reference beam. The method is based on the use of two independent reference beams having orthogonal linear polarization properties can be used to form, with as single object beam, a single hologram which can be acquired with a very short acquisition time.

- Scanning the wavelength allows to determine the modification of the APSF wavelength: chromatic aberrations can be evaluated.

- Performing fast steps in the xyz direction, a few nanometers in depth, within a range of a few tens of microns, and acquiring the corresponding stack of holograms at video rate can obtain the spatial distribution of the APSF. The originality of the method lies in its capacity to record the full 3D APSF from a rapid 1D-3D-scan, minimizing therefore the noise contribution from external perturbations.

- A plurality of parameters can be derived from a detailed measure of APSF: PPSF (phase of APSF), IPSF (Intensity Point Spread Function), CTF (Coherent Transfer Function) and AOTF (Intensity Optical Transfer Function)

- In another embodiment of the invention, One or more embodiments (combined or not) can be implemented in a DHM (Digital Imaging Microscope)

Brief description of the drawings

**Fig. 1.** Sketch illustrating the concept of APSF measuring technique and featuring the instrument which includes an illumination source, a point object, the image of which is formed by the Optical Imaging System and further transmitted to a wavefront sensing device, which delivers the digital wavefront data to a computer which computes the APSF

**Fig. 2** Scalar Debye theory: focusing of a spherical wave through a lens of focal f, half-aperture a, maximum subtended half angle $\alpha$.

**Fig. 3** Vectorial model: focusing of a linearly polarized (*x* direction) beam through a lens of focal f, half-aperture a, maximum subtended half angle $\alpha$.

**Fig. 4** x-, y- and z-components of the vectorial transverse APSF (*xy*) for a x63/0.85 MO. The intensity distributions are normalized, the phase distributions are coded between $-\pi$ = black and $\pi$ = white.

**Fig. 5** Vectorial axial APSF for a x63/0.85 MO (a) and a x100/1.3 MO (b). The intensity distributions are enhanced by a non-linear distribution of the gray levels, the phase distributions are coded in 8 bits between $-\pi$ = black and $\pi$ = white.

**Fig. 6** Axial APSF (*xz*) examples when the coverslip and the immersion oil refractive index are varied (Gibson model): ideal case ng=1.525, ni=1.518 (a), coverslip refractive index is varied ng=1.530 (b), immersion oil refractive index is varied ni=1.514 (c). The MO considered here was x100/1.30. The intensity distributions are enhanced by a non-linear distribution of the gray levels, the phase distributions are coded in 8 bits between $-\pi$ = black and $\pi$ = white.

**Fig. 7** Axial profiles through the *xz* section of the IPSF and PPSF for the x100/1.30 MO, without (a) and with (b) spherical aberrations induced by the use of non-designed parameters (coverslip, immersion oil).

**Fig. 8** Experimental setup for the APSF measurement: BS beam-splitter, BE beam expander, NF neutral density filter, $\lambda/2$ half-wave plate, M mirror, FC lens coupling the light in a light conduit (fibre) or path, PS piezo system, MS micrometric stage, OIS Optical Imaging System, *O* object wave, *R* reference wave. Insert: a detail showing the off-axis geometry at the incidence on the CCD.

**Fig. 9** (a) example of an experimental 512x512 8 bits hologram; (b) a zoom, corresponding to the dashed square of (a), where the interference fringes appear more visible; (c) the Fourier spectrum of (a) containing the zero order (zo), the real image (ri), the virtual image (vi) and also parasitic interferences spatial frequencies (p); (d) Fourier spectrum after application of the bandpass filter.

**Fig. 10.** Reconstructed images of the pupil hologram: a) intensity, b) direct measured phase, c) aberration function, d) residual phase after aberration function subtraction. (Phase images gray-scale range is between $-\pi$ and $\pi$).

**Fig. 11.** Focusing through a lens of aperture a, focal f and maximum subtended half-angle $\alpha$.

**Fig. 12** Modification of the basic version of the measuring instrument by the introduction of a second, interwoven Mach Zehnder interferometer to improve the alignment procedure and correct for the parasitic phase fluctuations.

**Fig. 13** Simplified version of the previous instrument where a single interferometer provides the hologram in the output pupil of the OIS. The full APSF can be derived from this single hologram taken on CCD2 by simply propagating the wavefront reconstructed on the output pupil.

**Fig. 14** Axial (a) and radial (b) image comparisons in amplitude and phase between experimental APSF measurement (up), calculated APSF with the Gibson and Lanni model (middle) and calculated with the scalar model of diffraction with aberration description extracted in the pupil (down). Measurements performed in oil (n=1.518) without coverslip for a x100 1.3 NA microscope objective. (Intensity images are enhanced by a non-linear distribution of the gray levels; phase images gray-scale range is between $-\pi$ and $\pi$).

**Fig. 15** Temporal phase fluctuations at CCD1, CCD2, and the phase difference between the two averaged phases provided by the two holograms(1000 holograms recorded in 40 seconds).

**Fig. 16.** Wavefront sensing device modified to measure from a single hologram, the amplitude and phase of the two components of the polarization of the object beam. Two independent reference beam having orthogonal linear polarization properties can be used to form, with a single object beam, a single hologram which, as emphasized in the embodiment F) described above, can be acquired with a very short acquisition time.

**Fig. 17** Axial APSF (amplitude and phase) for different coverslip thickness compensation in an adjustable collar x20 0.4 NA microscope objective: collar at position 0 (a), 0.5 (b) and 1 (c). The insets enhance the phase singularities appearing at the zero intensity points. The intensity distributions are enhanced by a non-linear distribution of the gray levels, the phase distributions are coded in 8 bits between $-\pi$ = black and $\pi$ = white.

**Fig. 18** Axial (a) and radial (b) comparisons in amplitude and phase between experimental APSF measurement (up) and calculated APSF with the Gibson and Lanni model for a x100 1.3 NA microscope objective. Measurements performed in oil (n=1.518) without coverslip. The intensity distributions are enhanced by a non-linear distribution of the gray levels, the phase distributions are coded in 8 bits between $-\pi$ = black and $\pi$ = white.

**Table 1:** Zernike standard polynomials and measured coefficients in the pupil of the MO

### Detailed description of the invention

In the following description, although numerous features are introduced by "may" or "can", it is nevertheless acknowledged that all features comprised in the independent claims are not to be read as optional.

The object of the present invention is a method and an apparatus for measuring the APSF.

### Description of the APSF

The Amplitude Point Spread Function (APSF) of the Optical Imaging System (OIS) is defined as the complex field distribution, corresponding to the complex electromagnetic field (electric $E$ or eventually magnetic $H$) of the beam delivered by the OIS and originating from the point source, further designated by Point Object (PO).

Provided that the response of the medium propagating the beam is linear, the field $E(x,y,z)$ for an image of a distributed object $E_o(x_o,y_o,z_o)$ can be computed as:

$$\vec{E}(x,y,z) = \iiint_{ROI} \vec{E}_o(x_o,y_o,z_o) \otimes APSF(x,y,z,x_o,y_o,z_o)\, dx_o dy_o dz_o \qquad (1)$$

where, the ROI is the region of interest for the objects and $\otimes$ is in that case the tensor product.

The full concept of *tensor or scalar APSF* calls for the determination of the *APSF* dependency both on the Image Space Coordinates (ISC) comprising three variables $(x,y,z)$, designated in this case by $(x_i,y_i,z_i)$ and on the Object Space Coordinate (OSC) comprising the three variables designated by $(x_o,y_o,z_o)$, inside the ROI (space containing the point object).

It must be noticed that, for a particular choice of the ROI, the Image Space Coordinates (ISC) comprising the three variables $(x_i,y_i,z_i)$ can be put in one to one correspondence to the Object Space Coordinate (OSC) comprising the three variables $(x_o,y_o,z_o)$. By applying a coordinate transform (linear or non linear), a mapping of $(x_i,y_i,z_i)$ over $(x_o,y_o,z_o)$ is in general possible on the ROI. In most cases, the transformation is linear (multiplication by a matrix which is only a function of the magnification factor M). By a particular choice of scaling factors, $(x_i,y_i,z_i)$ and $(x_o,y_o,z_o)$ can be expressed in the same units: usually the units applying to the OSC. A single coordinate system is then sufficient to express the coordinates in the ISC as well as in the OSC. This assumption is implicitly made by most authors. This step achieves a normalization and permit to get free from the variability of magnification factors usually introduced by the consideration of OIS with different characteristics. The field $E(x,y,z)$ can therefore be parameterized by a common $(x,y,z)$ coordinate system, which holds for ISC as well as for OSC.

Generally, the *APSF* must be considered as a tensor (**APSF tensor**) of rank 9, with elements which obey some symmetry laws. The coefficients of the tensor are, in general complex functions of 6 independent variables: the three coordinates of the image: $(x,y,z)$ and the three coordinates of the object: $(x_o,y_o,z_o)$

Some of the OIS can be considered as "space invariant": the *APSF* tensor reduces to a complex function of three independant variables: $(x-x_o, y-y_o, z-z_o)$. The *APSF* tensor reduces to what is called the **3D-APSF tensor**, which has only a dependence on 3D coordinates $(x,y,z)$ .

If the depolarization effects are further neglected, the *APSF* tensor reduces further to the product of a complex 3D variable: multiplied by the unit tensor. The complex 3D variable is called the **3D-APSF scalar** which is a complex number, function of $(x,y,z)$. Only this last concept has been mentioned in the literature.

### Theoretical models for the calculation of the ideal 3D APSF

In order to compute the *APSF* tensor , a reciprocity principle can be applied which states that the *APSF* tensor can be computed as the wavefront distribution $E(x,y,z)$ in the ROI of a point source (punctual object) in the region conjugate to the ROI by the OIS.

### 3D-APSF Scalar

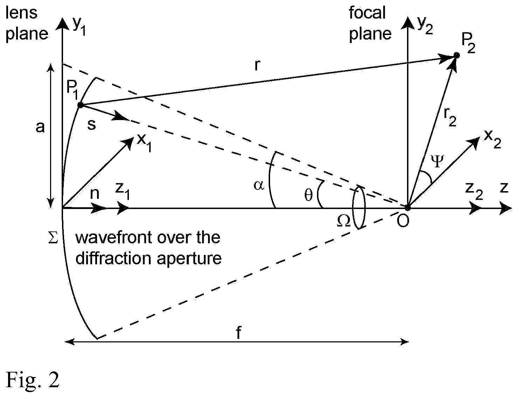

By applying the scalar Debye theory, based onto the Debye approximation (Gu, 2000), the field in the focal plane $U(P_2)$ can be computed as a superposition of plane waves with different propagation directions $\vec{s}$ within the solid angle $\Omega$ subtended by the lens (see Fig. 2):

$$U(P_2) = \frac{i}{\lambda} \iint_{\Omega} P(P_1) \exp(-ik\vec{s} \cdot \vec{r}_2) d\Omega \tag{2}$$

where $P(P_1)$ represents the apodization function in the lens plane (Gu, 2000), $\vec{r}_2$ gives the position of the observation point in the focal plane, $\lambda$ is the wavelength and $k$ is the wavenumber defined as $k = 2\pi/\lambda$.

Debye theory combines in this way the geometrical and the wave optics, because all the individual plane waves can be seen as corresponding to the optical rays from the geometrical optics. The Debye integral generally is valid for Fresnel numbers much larger than unity (Wolf & Li, 1981) and in addition, the observation point must be close to the optical axis, especially when aberrations are present in the system (Sheppard, 2000). If the NA is not too high, below 0.65 (see further), the paraxial approximation can be used. Within the paraxial limit $\sin \theta \approx \theta$ (Fig. 1) and the scalar Debye theory can be consequently simplified, leading to an expression similar to that obtained in the Fresnel approximation (Gu, 2000). A comparison between these two theories (Marian, 2005; Marian & Depeursinge, 2004) shows that significant discrepancies appear if a higher NA is considered (above 0.65). The two models yield comparable results for lower NA, with an easier implementation and a reduced calculation time if the paraxial model is used.

### Tensor 3D-APSF

The Debye theory can be generalized in a vectorial form, by taking into account the vectorial nature of the electromagnetic field and the polarization state of the incident field. The simulations presented here are based on this theory. The advantage of using the vectorial theory as a first choice, is the accuracy in predicting specific features of high NA systems such as apodization and depolarization effects (Gu, 2000).

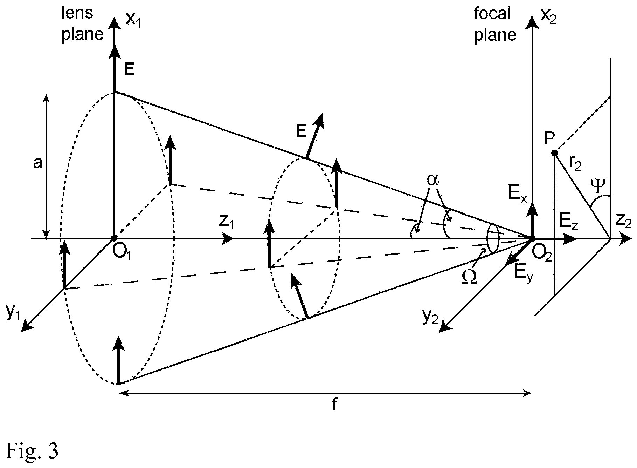

We have considered here the case of an incident field linearly polarized in the $x$ direction, but the expressions could be generalized for any arbitrary polarization state (Mansuripur, 2002). Even if the incident field had component only along the $x$ direction, the field at the focal plane will have components along all the 3 directions $x$ (unit vector $\vec{i}$), $y$ (unit vector $\vec{j}$) and $z$ (unit vector $\vec{k}$) (Fig. 3) and for a specific position can be calculated as follows (Gu, 2000):

$$\vec{E}(r_2, z_2, \psi) = \frac{\pi i}{\lambda} \left\{ [i_0 + i_2 \cos(2\psi)]\vec{i} + i_2 \sin(2\psi)\vec{j} + 2ii_1 \cos\psi\vec{k} \right\} \tag{3}$$

where $(r_2, z_2)$ are the radial and axial coordinates of the observation point at the focal plane relative to the focus point and $\psi$ is the azimuth angle defining the radial direction $r_2$. When $\psi = 0$, the direction is along the vertical $x$ axis, whereas for $\psi = \pi/2$ the direction is along the horizontal $y$ axis. The definition of this angle is important in the vectorial theory where the symmetry about the optical axis in the focal plane is broken due to the depolarization effect, unlike in the scalar model.

$i_0, i_1, i_2$ are three integrals expressed as follows:

$$i_0 = \int_0^{\alpha} \sqrt{\cos\theta} \sin\theta (1 + \cos\theta) J_0(kr_2 \sin\theta) \exp(-ikz_2 \cos\theta) d\theta$$

$$i_1 = \int_0^{\alpha} \sqrt{\cos\theta} (\sin\theta)^2 J_1(kr_2 \sin\theta) \exp(-ikz_2 \cos\theta) d\theta \tag{4}$$

$$i_2 = \int_0^{\alpha} \sqrt{\cos\theta} \sin\theta (1 - \cos\theta) J_2(kr_2 \sin\theta) \exp(-ikz_2 \cos\theta) d\theta$$

where $J_0, J_1, J_2$ are the Bessel function of the first kind and of the zero-, first- and respectively second-order and the factor $\sqrt{\cos\theta} = P(\theta)$ represents the apodization function for a system obeying the Abbe sine condition (Gu, 2000), like a microscope objective. The Abbe sine condition, which is satisfied for all MO, permits considering within this vectorial theory large angles that are not compatible with a paraxial approximation.

The presence of the three components in the image plane:

$$E_x = \frac{\pi i}{\lambda}\left[i_0 + i_2 \cos\left(2\psi\right)\right]$$

$$E_y = \frac{\pi i}{\lambda}i_2 \sin\left(2\psi\right) \tag{5}$$

$$E_z = \frac{\pi i}{\lambda}2ii_1 \cos\psi$$

The total intensity $I$ in the focal plane (the transverse IPSF) can be calculated as the sum of the intensity components:

$$I = \vec{E} \cdot \vec{E}^* = \left(E_x\vec{i} + E_y\vec{j} + E_z\vec{k}\right)\left(E_x\vec{i} + E_y\vec{j} + E_z\vec{k}\right)^* = |E_x|^2 + |E_y|^2 + |E_z|^2 = I_x + I_y + I_z \tag{6}$$

The three phases $P_x$, $P_y$, $P_z$ of the field components respectively $E_x$, $E_y$, $E_z$, must be considered as independent.

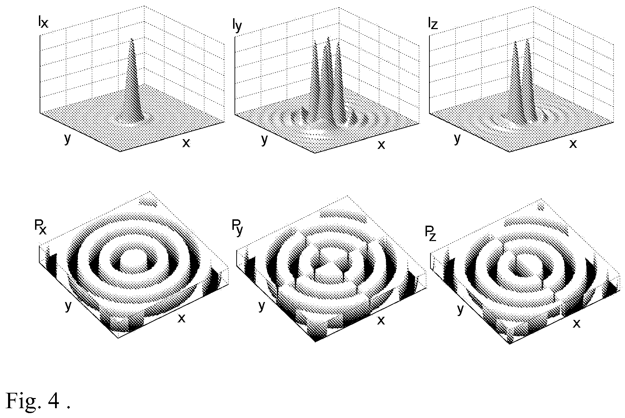

Fig. 4 presents the intensity and the phase distributions for each component in the focal plane of a x63 MO with 0.85 NA. The wavelength for the calculations was $\lambda$=532 nm. The structure of each component can be explained by simple geometrical considerations. In our particular case the incident electric vector oscillates along the $x$ direction and, after the refraction by the lens, it is bent in accordance to the refraction law. Consequently, the field at the focus contains not only components with the same polarization as the incident one ($x$ direction), but also orthogonal ($y$ direction) and longitudinal ($z$ direction) components. This effect is called depolarization, as the electric vector looses its initial polarization state. On Fig. 3 one can observe that the rays in the $yz$ plane will contribute only to $I_x$ component, the rays in the $xz$ plane will contribute to both $I_x$ and $I_z$ component, whereas the intermediate rays situated between these planes bring contributions to all the three components $I_x$, $I_y$ and $I_z$. The $I_x$ distribution in the $xy$ plane is obtained by superposition of all the $x$ components from each ray and the same reasoning holds for the $I_y$ and $I_z$ distribution. The absence of the $I_y$ and $I_z$ components in the $yz$ plane is illustrated with the apparition of a zero intensity line along the $y$ direction in the $I_y$ and $I_z$ distributions. Similarly, the absence of the $I_y$ component in the $xz$ plane explains the dark line along the $x$ direction in the $I_y$ distribution (see Fig. 4).
Because of the uneven contributions coming from each component, the resulting total intensity in the focal plane does not present a radial symmetry any more but exhibits a radial elliptical shape. The weights of each component of the total intensity are not equally distributed and for the case of the -x63/0.85 MO considered as typical examples, the maximum intensity components ratio $I_x$:$I_y$:$I_z$ taken at the focus, are in proportion of, respectively, 1: 0.0032: 0.1290. These ratios depend on the NA, with increasing weights of $I_y$ and $I_z$ for increasing NA, and observing that the radial elliptical deformation becomes more pronounced as NA increases. Note that for small NA, the depolarization effect is very small and even disappears, resulting from the fact that for small angles, $J_1(kr_2 \sin\theta)$ and $J_2(kr_2 \sin\theta)$ become negligible compared to $J_0(kr_2 \sin\theta)$. Therefore the field at the focus (see equation 3) can be reasonably approximated by the scalar expression

$$E\left(r_2, z_2, \psi\right) \cong \frac{\pi i}{\lambda}i_0 \tag{7}$$

In the case of high NA, $I_y$ is negligible compared to $I_x$ and $I_z$, and one can observe that the main lobe of the total intensity distribution is essentially broadened because of the depolarization effect observable in the x direction, i.e. the direction of polarization, while the $xy$ distribution is nearly similar to the $xy$ distribution obtained with the scalar model (Marian, 2005; Marian & Depeursinge, 2004). Therefore, an ellipse can be defined with two orthogonal axis measured by the FWHM (full width at half maximum) of the central lobe of the radial IPSF, along the $x$ direction profile (for $y$=0) and respectively along the $y$ direction profile (for $x$=0). Then an ellipticity factor can be calculated as the difference in length between the two axes of the ellipse, expressed in percent relatively to the axis length not affected by the depolarization effect ($y$ axis in the case of a $x$-polarized light). A quantitative comparison shows that for low numerical apertures, this factor is in order of 2.8% for a 0.35 NA ($\approx 20°$ subtended half angle) and respectively 6.2% for a 0.5 NA ($\approx 30°$ subtended half angle). The deviation increases significantly with NA. For an immersion oil x100 with 1.3 NA MO ($\approx 70°$ subtended half angle), it reaches 30%. We can objectivise the physical limit to the scalar model if we consider as tolerable a maximal error corresponding to an ellipticity factor of 10%. This deviation corresponds to a 0.65 NA ($\approx 40°$ subtended half angle), above which the use of the vectorial model is imposed for an accurate APSF description. However the above considerations are valid for a linear incident polarization only, while in the case of an unpolarized or circularly polarized beam, an average between all the polarization states occurs and the scalar model can be still used.

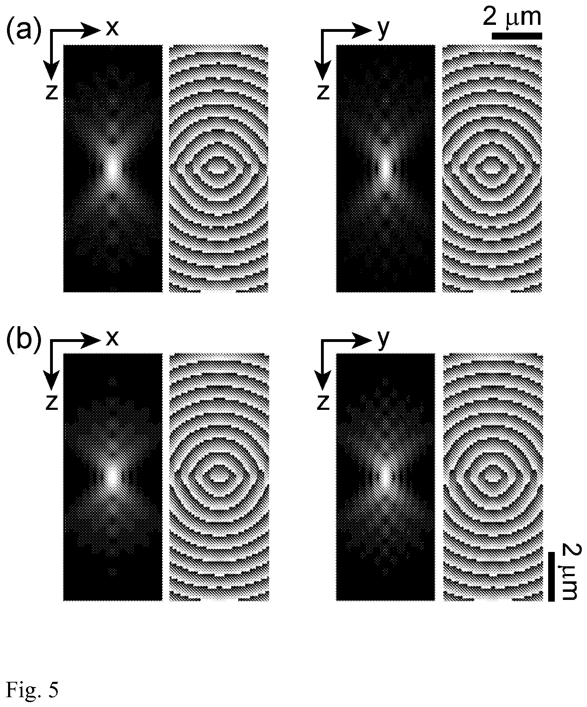

Fig. 5 presents the axial APSF (total intensity $I$ and phase $x$ component $P_x$) calculated for an x63/0.85 MO (Fig. 5a) and respectively an x100/1.3 MO used with a 1.518 immersion oil (Fig.5b). The simulations were performed by using the vectorial theory. We have named axial APSF an axial section along the optical axis through the 3D APSF, whereas the transverse APSF is the $xy$ section at the focal point through the 3D APSF. We present here both the $xz$ and the $yz$ sections. Concerning the phase images, only the $P_x$ component is represented. In the $yz$ plane ($\psi = \pi/2$), because there is only a $x$ component contribution as already discussed before, only $P_x$ is defined, whereas in the $xz$ plane ($\psi = 0$), both $P_x$ and $P_z$ appears due to the $x$ and $z$ contributions. No $y$ component appears in these plans and therefore $P_y$ is not defined. If we consider an intermediate section between $xz$ and $yz$, for example for $\psi = \pi/4$, all three phases $P_x$, $P_y$, $P_z$ are defined separately. It is in principle possible measure individually each polarization component in amplitude and phase, for instance by using a dedicated holographic setup developed in the part of the description devoted to the method.

**Interest of the Scalar 3D-APSF and associated PPSF in the presence of aberrations**

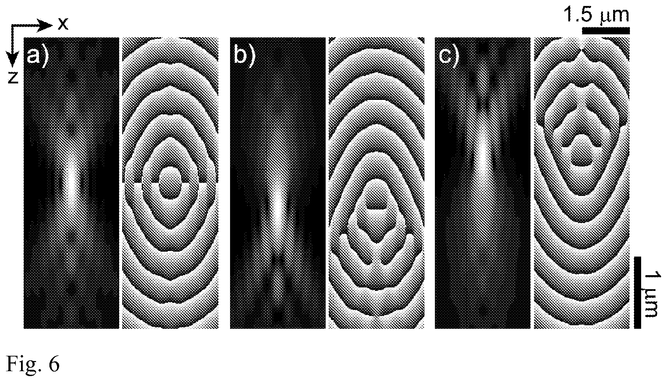

Aberrations are present in most OIP's: lenses , lenses assembly, MO. They are generally a consequence of the fabrication process: spherical aberrations in particular are due to grinding and polishing processes of the lens which naturally tend to produce spherical surfaces. These aberrations are usually compensated by the recourse to the assembly of several lenses having complementary geometrical and dielectric characteristics. Other types of aberrations appear when the focused beam crosses one or several dielectric layers, for which the MO has not been designed. To analyze the aberrations appearing when a microscope objective is used under inappropriate conditions, Gibson (Gibson & Lanni, 1991; Gibson, 1990) proposed a simple approach, based on the scalar diffraction theory and geometrical optics calculations. The aberration function is obtained through a calculation involving the ideal design parameters of the MO (coverslip refractive index, coverslip thickness, immersion oil refractive index) and their effective value. The simulations presented here were obtained by implementing the approach suggested by Haeberlé (Haeberle, 2003), who combined the Gibson and the vectorial Török models. Fig. 5 summarizes the simulations of the APSF of a x100 MO with 1.3 NA, with non-polarized light, used under different conditions. The design conditions of the MO are defined by an immersion oil of refractive index equal to 1.518 and a coverslip of 0.17 mm thickness and 1.525 refractive index (standard value for some manufacturers). In this case, the APSF is perfectly symmetric, both transversally and axially (Fig. 6a), as predicted in the case of non-aberrated APSF. Any small deviation from the ideal conditions leads to significant aberrations (Fig. 6b,c). The main lobe of the APSF is shifted from the central position (Fig. 6b,c), which indicate the presence of spherical aberration. It was proved (Gibson, 1990) that high order spherical aberrations are necessary to describe properly this kind of aberrations. For example, the aberrations induced by the immersion oil refractive index variation can be properly described by using 3$^{rd}$ and 5$^{th}$ order spherical aberration, whereas the use of a non-designed coverslip requires 3$^{rd}$, 5$^{th}$, 7$^{th}$ and even more higher order spherical aberration. It was also observed that the coverslip thickness variation has only a small influence, while the coverslip refractive index variation affects drastically the APSF, even for very small variation about 0.001. Fig. 6 shows these aberration effects, when the refractive index of the immersion oil was changed from the ideal 1.518 value to 1.514 (Fig. 6b) and when the refractive index of the coverslip was changed from the 1.525 to 1.530 (Fig. 6c). The high sensitivity related to the immersion oil refractive index suggests that high attention must be paid at the rapid change of the immersion oil refractive index with the wavelength (about 0.01 throughout the visible spectrum) or due to the temperature variations (about -0.0004 per additional degree). Concerning the coverslip, we must mention also that MOs can be found which include a correction collar to compensate for the coverslip thickness variation. This is done by a slight displacement of some lenses that compose the objective. However, because of the large number of orders of spherical aberration appearing (Gibson, 1990), it is unlikely that the movement of a small number of lenses would be sufficient to compensate for all of the significant orders of spherical aberration introduced.

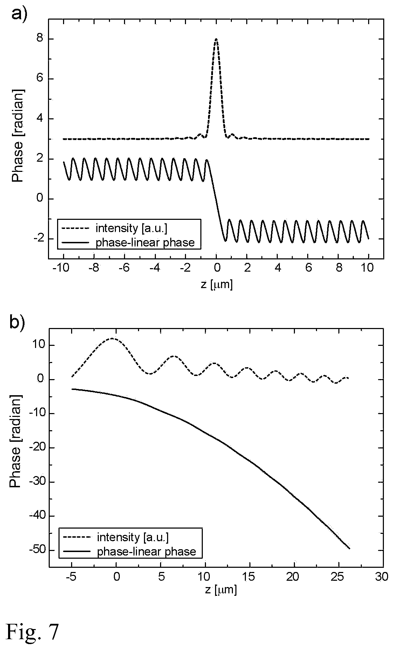

As an example of the use of the phase (PPSF) modifications induced by optical aberrations, the following situation has been treated: theoretical calculations of the phase variations along the optical axis have been performed in the presence of aberrations and compared to the absence of aberrations. The results are presented in Fig. 7. Indeed, it is usually expected that the phase increases linearly along the optical axis, proportionally to the displacement, but modulated by the so-called phase anomaly at each passage through an intensity minimum on the optical axis (see for example: Born & Wolf, 1980; Farnell, 1958; Li, 1985). In the designed conditions, the subtraction of a linear phase from the axial phase leads as expected (Fig. 7a) to the observation of a $2\pi$ rapid phase shift for the main axial intensity lobe, the well known Gouy phase shift, and rapid phase changes smaller than $\pi$ for all the others secondary lobes. But the phase, except the modulations described above, remains proportional to the displacement along the optical axis. This is no more the case in the presence of aberrations, where the proportionality is not preserved, as can be seen from Fig. 7b, where is presented a simulation of the axial APSF in the presence of the high order spherical aberration induced by the absence of appropriate coverslip and immersion oil. The axial phase, from which the same linear phase has been subtracted, diverges rapidly from the linear phase when going away from the main intensity lobe. Furthermore, the phase anomalies associated with the passage through the axial intensity minima are weakened and the intensity minima being less deep compared to the designed case, and cannot be distinguished any more. These first results suggest that these anomalies in the phase axial phase profile could be exploited to identify the aberrations and possibly to quantify their presence. A more complete and systematic study of the phase non-linearity induced by aberrations is henceforth made possible by the exploitation of the method and instrument hereby disclosed.

**Method and apparatus for the measurement of the *Amplitude Point Spread Function (APSF)*,**

a) A method and apparatus of great generality for the measuring of the *Amplitude Point Spread Function (APSF,)*, incorporating the *Phase Point Spread Function (PPSF)* and or the *Amplitude Optical Transfer Function (AOTF)* of an Optical Imaging System (OIS). It comprises

  a. An illumination source
  b. A point object irradiated by the illumination source
  c. An object beam taking its start at the point object, which is then collected and transmitted to a Wavefront Sensing Device (WSD) by the so-called Optical Imaging System (OIS),
  **d.** A so-called Wavefront Sensing Device delivering a Digital Wavefront (DWF) to a computer, which computes the *APSF, PPSF,IPSF, CTF* and *AOTF,*
  **e.** Optional means to move the Point Object,
  **f.** Optional means to move the OIS
  **g.** Optional means to change the wavelength of the illumination source

Where the so-called Wavefront Sensing Device is a device that measures the spatial distribution of the wavefield:

$$\vec{E}\left(x,y,z\right) = A\left(x,y,z\right)e^{i\phi\left(x,y,z\right)} \qquad (8)$$

The WSD yields therefore a description of the wavefield in term of amplitude and phase distribution in the image space. The wavefront is described by $\phi(x, y, z) = constant$

In its fundaments, the method consists in measuring the true *tensor-APSF* by determining the wavefront characteristics of the beam originating from the PO through the OIS, including the wave polarization state. By "wavefront characteristics", it is meant the amplitude and phase distribution of the complex field. The amplitude and phase determination can be repeated or achieved in parallel for each polarization state.**Included in the concept are the following extensions:**

b) The full concept of *tensor or scalar APSF* calls for the determination of the *APSF* dependency both on the Image Space Coordinates (ISC) comprising three variables *(x,y,z)* and on the Object Space Coordinate (OSC) comprising the three variables $(x_o, y_o, z_o)$.

c) In order to achieve this determination in a tolerable time scale, a general strategy is disclosed where a fast scan is performed first to establish the dependency of the *APSF* on ISC: *(x,y,z)* for each $(x_o, y_o, z_o)$: This fast scan allows for the delineation of the ROI and the validity of the mapping of $(x_i, y_i, z_i)$ over $(x_o, y_o, z_o)$.
Then a slower scan of $(x_o, y_o, z_o)$ *point object* will permit to measure the detailed dependence of the the *APSF (x,y,z)* on $(x_o, y_o, z_o)$.
During the fast scan, framing of the ISC is achieved in order to keep the diffracted beam in the frame of the camera. Further adjustment of the proper alignment of the OIS is performed in order to keep object point inside the ROI and to avoid undesired aberrations originating from the setup misalignment.
An iterative procedure can then be performed in order to reach proper measuring conditions

d) Additional time spare can be obtained by defining a sampling strategy in object space, which exploits the symmetries of OIS: radial symmetry in particular. Sub-spaces can therefore be defined which take into account the symmetries of the OIS .

e) The hypothesis of space invariance, if it can be verified from case to case, can simplify the APSF measurement procedure: it is hereby proposed to define a subset of point objects $(x_o, y_o, z_o)$ in the ROI, based on the particular symmetries of the OIS and to test the space invariance of *APSF (x,y,z)*: can be tested by computing first the coordinates of the images of the point objects: $(x_i, y_i, z_i)$, then forming a set of tables with APSF $(x-x_i, y-y_i, z-z_i)$ values for each point object $(x_o, y_o, z_o)$. The variance of APSF $(x-x_i, y-y_i, z-z_i)$ can be computed over the subset of point objects $(x_o, y_o, z_o)$, provided that the phase at image points $(x_i, y_i, z_i)$ can be fixed at a constant value:0 for example, its value will be taken as the criterion to accept or reject the hypothesis of space invariance of APSF. If it is accepted, the average value of APSF $(x-x_i, y-y_i, z-z_i)$ will be retained as the 3D APSF.

**Included in the concept are also the following considerations:**

f) The illumination source can be any kind of optical source having spatial and temporal coherence properties sufficient to allow for the formation of a measurable interference pattern. Most of the laser sources are convenient, but also broadband sources like superluminescent diodes or continuum generating crystal fibers. In the demonstrator used to assess the technique proposed, the light source is a $\lambda$=532 nm laser (frequency-doubled Nd:YAG) with adjustable power up to 100 mW.

g) The point object, used as point source for the OIS, is preferably a nanometer-sized object, which scatters sufficient light signal. Examples of light scattering objects suitable for that application are nanoparticles like metallic nanobeads: silver or gold, but quantum dots also suit that application. Another category of point objects include ultra small pinholes, thin metallic diaphragms that can be irradiated by the beam guided along the light path. In general the light path represent a free propagation of the exciting beam, but it may be a optical fiber in the case of NSOM or SNOM tips: metallized ultra thin dielectric tips like NSOM or SNOM tips used in Near Field Scanning Optical Microscopy can be used as PO. Such SNOM fiber, with a 60 nm diameter emitting tip .has been used in the proposed implementation of the method. It must be pointed out that systems using NSOM fibers have already been proposed to measure, in the focus of lenses, the electromagnetic field intensity (see for example Rhodes *et al.* 2002, Fu *et al.* 2002 or Jia *et al.* 2005) or even the complex field in amplitude and phase (Walford *et al.* 2002), but in all the experiments, the NSOM tip was used to collect the light signal and not as a sub-wavelength light emitter object like in the present implementation.

h) The Optical Imaging System is any optical system forming a real or virtual image of an object: lens or assembly of lens, refractive or diffractive lenses and micro-lenses, GRIN lenses. But in most applications of the present method and instrument, the Microscope Objective: MO is of concern.

i) finally the concept of APSF (and its phase the PPSF) is linked to the concept of AOTF (Amplitude Optical Transfer Function) or CTF (Coherent Transfer Function) by a 3D Fourier transformation that can be calculated by the computer. In the same way the IPSF can be obtained as the square of the APSF.

The concept includes the following embodiments A) to N) which can be implemented alone or in combination with other embodiments :

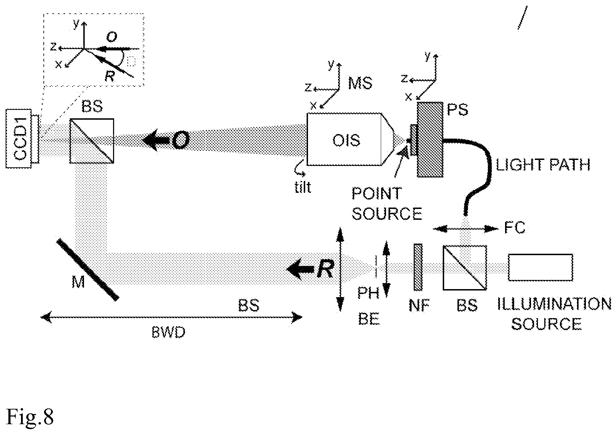

A) In a first example, the wavefront sensor can be realized by means of a Mach-Zehnder interferometer (Fig. 8). In one arm of the interferometer, the point-object PO, coherently illuminated by a light path connected to the illumination source through a beam splitter or a beam sampler, is imaged through the OIS, the *APSF* of which must be measured. The OIS is mounted on a micromechanical (or piezoelectric) xyz platform combined with tilt facilities, allowing for proper alignment of the OIS to avoid undesired aberrations originating from the setup misalignment. Fine PO movements, are achieved by a piezoelectric xyz-stage, which permits nanometric displacements (1 step =1.22 nm, within a range of 80 $\mu$m), which allows fine scanning of the ROI. In the second arm of the interferometer, the reference wave **R** is optionally enlarged by using a beam-expander, and then combined, by means of a beam-splitter, with the object wave **O** emerging directly from the OIS. The result of the combination of **R** and **O** waves is a hologram that will be acquired by the digital camera. The digital camera, here a charge coupled device (CCD) camera (CCD1) (but a CMOS camera or any type of camera, will also suit this application), is positioned at a large distance of the IOS (in the present demonstrator it is about 1500 mm) to create a sufficiently high magnification (about 1000x for a 100x MO), in order to obtain an optimal sampling by the digital camera of the diffraction pattern spatial distribution originating from the point object image : here a CCD camera is used with sensitive area around 6.7mm in size (commonly 1024x1024 pixels of size 6.7 $\mu$m). In the case where the OIS is a MO, this geometry is particularly well suited because most of the MO are now commonly infinity corrected and this large distance ensures a correct use of the MO, i.e. a correct working distance. Optionally the OIS includes a tube lens commonly used in contemporary microscopy.

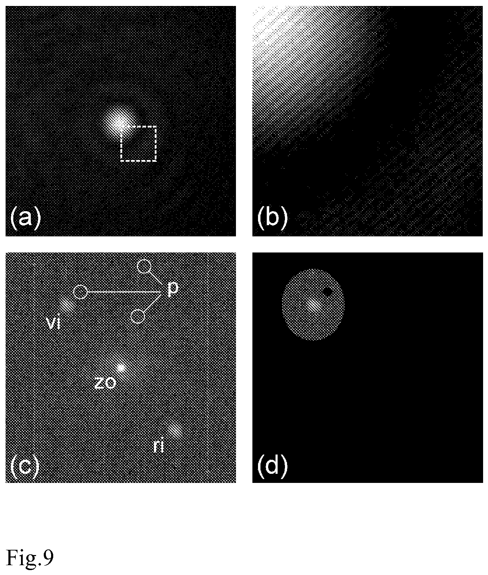

*Holograms reconstruction:* In digital holography a digital camera is used to record the hologram, instead of a photographic plate or photorefractive crystal traditionally used in classical optical holography. The hologram (Fig. 9a and 9b) is formed by the interference between the wave field diffracted from the object to be analyzed, i.e. the object wave **O** and a reference wave **R** provided from the same source, in order to keep the coherence properties. The hologram intensity is given by:

$$I_H(x,y) = |\mathbf{R}|^2 + |\mathbf{O}|^2 + \mathbf{R}^*\mathbf{O} + \mathbf{R}\mathbf{O}^* \qquad (9)$$

where $\mathbf{R}^*$ and $\mathbf{O}^*$ denote the complex conjugates of the reference wave and respectively the object wave. The digital hologram, resulting from the two-dimensional sampling of $I_H(x,y)$ by the CCD camera, is transmitted to a computer where the hologram reconstruction is numerically performed.

Our reconstruction process consists in evaluating the interferogram or hologram using a Fourier-transform method with the following steps. In a first step, we compute the Fourier transform (Fig. 2c) of the hologram. In a second step, only the $\mathbf{R}^*\mathbf{O}$ or the $\mathbf{R}\mathbf{O}^*$ spatial frequencies are selected in the amplitude spectrum, by applying a simple filter (Fig. 9d). Due to the off-axis geometry, these spatial frequencies are separated in the Fourier plane, symmetrically located with respect to the zero order spatial frequencies (Cuche *et al.,* 2000; Goodman, 1968). The larger the angle θ between R and O is, the better the separation between these spatial frequencies terms will be. In this filter process, we use a filter with a bandwidth as close as possible to the $\mathbf{R}^*\mathbf{O}$ or $\mathbf{R}\mathbf{O}^*$ bandwidth, in order to keep a maximum of high frequencies and consequently a maximum of details in the reconstructed image. Moreover this filter allows eliminating the influence of parasitic reflections (Fig. 9c) that are not detectable in the hologram due to their low intensity but are clearly visible in the spectrum. The third step simulates the re-illumination of the hologram with the reference wave, considering that in the Fourier space this multiplication by $\mathbf{R}$ corresponds to a translation of the selected frequencies to the center of the Fourier plane. This procedure must be carefully achieved in order to avoid the introduction of any phase error during the reconstruction. It is performed by an automatic algorithm described in the paper of Colomb et al. (Colomb *et al.,* 2006). Briefly, this algorithm is based on a calibration on a constant phase surface, which is, in our case, obtained by an important defocus of the point source: the point is moved away from the focal point till the object wave recorded on CCD1 corresponds to a cutoff portion of a slowly converging or diverging spherical wave, where the phase can be assumed to be constant on a transversal plane. Once this calibration of the system is done, the entire stack of holograms is processed in the same way. In a last step, the complex amplitude (i.e. the APSF) is obtained by an inverse Fourier transform and the IPSF and PPSF are afterwards extracted as the modulus squared and the argument of the APSF. The intensity and phase information can be separated in two different images, even though only a single hologram is required to restore them. The accuracy in a phase transverse distribution was assessed at about $\lambda/60$ for transmission measurement conducted in air or $\lambda/40$ for oil immersion with a refractive index of 1.518 consistently with the results presented further We also mention that the values extracted for the PPSF are quantitative values modulus $2\pi$, whereas the IPSF values are extracted up to a multiplicative constant that depends on the intensity of the reference wave. It must be noticed that phase unwrapping of the PPSF would yield a univocal phase function, provided that the discontinuity points could be clearly identified and modellized. A normalization can be optionally achieved by putting the intensity integrated over the ROI to one.

B) In a preferred embodiment of the invention, which can be considered as a particular case of embodiment A), the beam splitter, is placed as close a possible to the output pupil of the OIS, It enables the capture by the camera of an image of the OIS output pupil, with minimal propagation distance. One can assume that the recorded hologram, allows the restitution of the correct wavefield in the plane of the OIS output pupil. This approximation can be made because the beam emanating from the OIS converges very slowly to the PO image location. Due to the small angles involved, the measured wavefront can be considered as unperturbed.

In this prefered embodiment, the disclosed method describes the evaluation of the APSF from the wavefront measured in the OIS pupil plane.

In ref. (Colomb 2006), it is disclosed how to measure and compute the phase aberrations induced by an optical setup, especially the OIS. It is also shown how the quantitative evaluation of these phase difference from ideal can help in compensating the aberrations effects in the reconstructed phase images. This compensation is based on the evaluation of the phase function along chosen lines, traced in the reconstructed phase image at locations where the phase is known to be constant. This automatic procedure provides quantitative values of the aberrations in terms of the coefficients calculated according to a mathematical model. In this reference, a polynomial model has been used in the x-y plane to fit the phase function.

In the method disclosed in this embodiment, a fit with Zernike polynomials (θ - ρ) is used in the present method. The Zernike polynomials $Z_i$ are well adapted to describe accurately the phase aberrations in the optical transfer function $P(x,y)$, which can be developed in series: $P(x,y) = \sum_i a_i Z_i$ , where $\alpha_i$ are coefficients and $Z_i$ are the Zernike polynomials. The $Z_i$ are defined on a circular pupil with unity radius and therefore, the measured pupil dimensions have been normalized during the analysis to satisfy to this condition. A summary of the used Zernike polynomials with their standard denomination is presented in Table 1. In order to evaluate properly the aberration coefficients, the fitting procedure is performed in several steps:

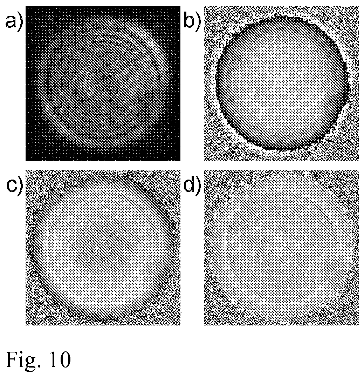

1. The contributions to the wavefront corresponding to the ideal (non aberrated) beam generated by the OIS is determined. The procedure to perform this step is similar to the procedure described in patent: Cuche E. and Depeursinge C (P 07 Oct 1998).WO200020929 and Cuche, E. et al. (1999): First, according to a simple 2-dimensional linear mathematical model has been used in the reconstruction process to compensate for the tilt aberration due to the off-axis geometry. The corresponding intensity and phase distributions are presented on Fig. 10a) and 10b). Secondly, a 2-dimensional parabolic function fit (quadratic terms) has been applied to the obtained phase distribution in order to compensate for the field curvature introduced by the focusing of the wavefront on CCD1.

2. After substraction of the linear and quadratic terms described previously (1.), the residual phase, representing the aberrations function in the pupil, is presented on Fig. 10c). A Zernike polynomials fit is applied to the residual phase corresponding to the aberration function, providing the direct decomposition in terms of aberration coefficients. The Fig. 10d) shows the phase distribution after subtraction of the Zernike polynomial fit, and, as expected, appears nearly constant, confirming that the used model is able to describe correctly the residual aberrations.

3. The full description of the wavefront in the OIS pupil plane, provides, precisely enough, the Coherent Transfer Function (CTF). The 3D APSF can then be obtained by computing the propagated wavefront, given by the Fresnel transform of the pupil function approximated by the Zernike polynomial approximation (including the quadratic term corresponding to the OIS focal distance) and multiplied by a phase factor. The Fresnel transform, in this long distance case, correspond most exactly to the Fourier transform. The APSF can therefore be simply computed as the Fourier transform of the CTF.

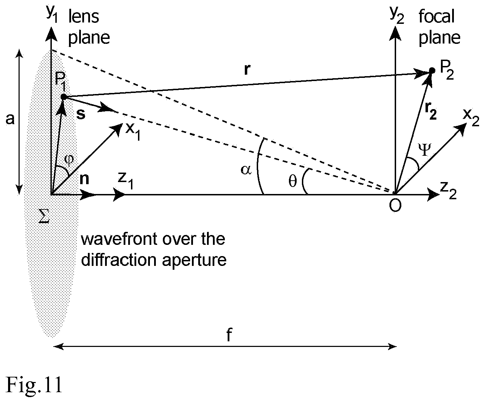

As an illustration of the application of the method to 3D-APSF determination, measurements have been done with a IOS consisting in a 100x MO with a 1.3 NA, with immersion oil (1.518 refractive index), but without coverslip, in order to introduce intentionally an aberration. The extracted coefficients for each aberration type are presented in the last column of Table 1. The extracted coefficients and the corresponding aberrations were introduced in a scalar model of diffraction in order to calculate the 3D APSF of the MO in the situation described on Fig. 11:

$$E(r_2, \psi, z_2) = \frac{i}{\lambda} \int_0^{2\pi} \int_0^{\alpha} P(\theta, \varphi) \exp\left[ikr_2 \sin\theta \cos(\varphi - \psi) - ikz_2 \cos\theta\right] \sin\theta \, d\theta \, d\varphi \, , \tag{10}$$

where $E(r_2, \psi, Z_2)$ is the APSF in polar coordinates, $k$ is the wavevector, $\alpha$ is the maximum angle of convergence of rays in image space, and $P(\theta, \varphi)$ is the pupil aberration function expressed in terms of $\theta$ and $\varphi$ (see Fig. 11 for clarity).

C) A method and apparatus for measuring the APSF directly from the hologram taken in the proximity of the PO image. In order to obtain a highly resolved image of the PO, over sampling of the focusing region is needed which can be obtained by increasing the magnification factor of the OIS. This goal can be reached by placing the camera far enough from the OIS. The wavevector x-y components on the image side and therefore in the hologram plane are related to the wavevector x-y components on the object side by the magnification factor M: compared to wavevector x-y components on the object side, the wavevector x-y components on the image side are reduced by a factor M. Keeping M large enough by moving the PO image far from OIS (experimentally up to 1500mm) ensures that the spatial frequency spectrum is correctly sampled even for wavevector x-y components on the object side close to the module of the wavevector itself (maximum possible for a given wavelength). In those conditions the camera can over- sample the image of the PO , i.e. with a sampling grid permitting to compute the spatial Fourier spectrum of the PO image in a range large enough to encompass the wavevector components in the plane perpendicular to the optical axis which are larger than the wavevector of the free propagating field divided by the magnification factor M. This condition is required to achieve a correct APSF estimation. The reconstruction of the wavefront yield a detailed measurement of the APSF and the full 3D APSF can be established by moving the reconstruction distance d around the focus, thanks to a pure numerical processing of the hologram (Fresnel transform multiplied by a changing phase factor).

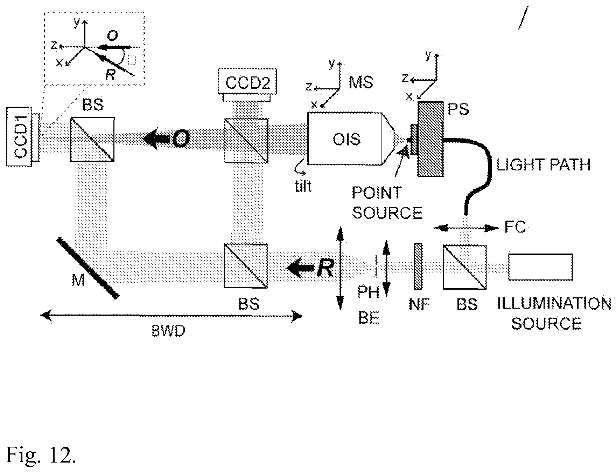

D) In another example (see setup arrangement described on figure 12), the WDS is composed of two interwoven Mach-Zehnder interferometers with two object beams obtained by splitting the object beam coming from the OIS by means of a beamsplitter and two reference beams obtained by splitting the reference beam by means of a second beamsplitter, both providing the holograms of PO imaged by the OIS. The two holograms acquired by camera CCD1 and CCD2 are formed, respectively, at a short distances from the OIS output pupil (proximal hologram) and at a large distance from the OIS output pupil (distal hologram), but at a short distance from the image of the PO. The two holograms are therefore taken respectively in the Frauenhofer diffraction regime and in the Fresnel diffraction regime with respect to the image of the PO. It can be said that thy are taken in the far and proximal field associated to the point object image. This has the consequence that the spatial frequency domain and the spatial domain can be sampled independently and that a full characterization of the wavefront is obtained in term of spatial and spatial frequency domain (so-called Wigner distribution).

It must be noticed that, practically the three Beam Splitters in the right part of figure 12 can be confounded in a single (large) Beam Splitter, playing the same role as the three of fig.12 and simplifying therefore the optical setup.

E) In another embodiment, the use of a second CCD or CMOS camera (CCD2) is that it can be used for alignment purposes: the OIS needs to be carefully aligned on the optical axis defined by the z-scanning direction of the PO and the position the CCD1 to assure a correct characterization of the OIS, without external influences originating from the setup imperfections due to misalignments (tilt, coma, astigmatism). This alignment procedure has revealed to be significantly facilitated when the output pupil of the OIS is monitored on CCD2. Indeed, due to the large image distance (here 1500 mm), a small tilt change of the OIS moves the image out of the field of CCD1.

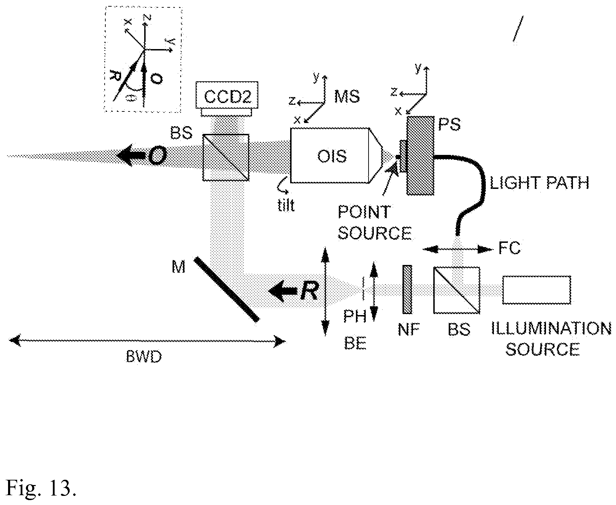

F) In an embodiment of the invention, the experimental setup can be simplified by dropping the camera CCD1 and taking the hologram on CCD2 (see fig. 13). In this case, the experimental setup is identical to the apparatus of the embodiment B) and the method of treatment of the hologram is the same.

G) In another example, an off-axis geometry was used on one or both cameras (CCD1 and /or CCD2), which means that **O** and **R** impinge on the hologram plane with different angles (see inset Fig. 8). The angle between **O** and **R** must be chosen in order to obtain fringes correctly sampled by the CCD camera. Neutral density filters were used to adjust the light intensity in the reference arm. The adjustment of the intensity ratio between **R** and **O** is useful in order to obtain high contrasts images. A half-wave plate was also inserted in the setup to control the polarization state in the reference arm, aiming to maximize the fringes contrast on the hologram. Experimentally, no important change on the hologram fringes contrast is observed when rotating the half-wave plate, attesting for unpolarized or weakly polarized light outgoing from the NSOM tip in the object arm.

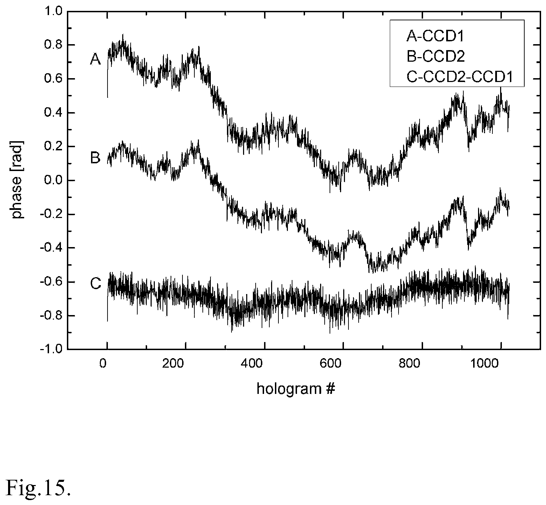

H) In another embodiment, the second camera CCD2 is also used to provide a phase reference: non negligible phase variations between the object beam and reference beam may arise mainly in the optical path from the illumination source to the point object, because the path from the illumination source to the point object may include vibration, strain or temperature sensitive optical elements like optical fibers. The hologram acquired yields a phase can be considered as the "zero" phase: it can be obtained by computing the averaged phase value over the pupil wavefront reconstructed from the hologram acquired close to the output pupil. With two holograms acquired by two digital cameras, the phase fluctuations introduced by the propagation from the illumination source to the point object can be dynamically cancelled by taking the difference of the phases calculated as the phase spatially averaged over the reconstructed wavefront. By operating the two digital cameras in a synchronous way, the time fluctuations of the phase and amplitude, caused, in particular by parasitic mechanical movements and temperature fluctuations can be eliminated by substraction. The measurement of the axial APSF may require a z-scan of the point object. During this scan, a stack of holograms is obtained by scanning the NSOM tip along the optical axis within a range of tens of microns and with a well-controlled step accuracy of a few nanometers. Each hologram is afterwards reconstructed, following the afore-mentioned reconstruction process. In the ROI scanning procedure, the acquisition of a hologram stack, performed at 25 Hz, takes from seconds to a few minutes, depending on the considered step and range. Therefore, stability must be ensured during the hologram stack acquisition, to provide accurate estimation of the axial PPSF. As in all interferometric techniques, many factors can affect the phase measurement, principally mechanical vibrations and air turbulences. To overcome these drawbacks, the system can be isolated on an anti-vibratory bench, and the whole stage protected from air turbulences by protecting tubes. The particular choice of positioning CCD2 close to the IOS output pupil and the fact of synchronizing it with CCD1 by an external trigger, permit the precise determination and monitoring of the phase fluctuations, which appear along the **O** and **R** paths, and along the fiber of the NSOM tip in particular. For example, a static measure was performed, i.e. a NSOM fiber was kept at the same position and a holograms stack was acquired during a time laps equal with the one estimated for an axial z-scan (40 seconds for 1000 holograms). The holograms recorded by both CCD1 and CCD2 were reconstructed, according to the previously described reconstruction process, and the time fluctuations of the phase were measured and averaged over a small region of about 30x30 pixels. The results are presented in Fig. 15 where it can be noticed that the CCD1 and CCD2 signals are well correlated, with a temporal standard deviation of 0.071 radians (4.11°) calculated onto the difference between the two phase signals. This means that the temporal phase fluctuations observed on the 2 CCDs are similar, and that no additional noise disturbs the waves along the lengthy path to CCD1.

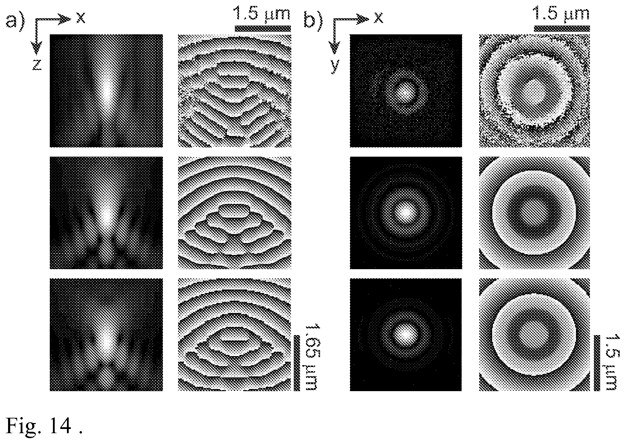

I) In another embodiment of the invention similar to embodiment B), the beam splitter and Camera CCD2 are placed as close a possible to the output pupil of the OIS. This arrangement enables the capture by the camera CCD2 of an image of the OIS output pupil, with minimal propagation distance. With the setup of Fig.12, a direct comparison is made possible between the 3D APSF measured with CCD1 when moving the SNOM tip along the optical axis, and the APSF derived from the evaluation of the Zernike polynomial fit describing the aberration coefficients with a single hologram acquired with CCD2. The results are summarized on Fig. 14, where axial 14a) and radial 14b) image comparisons are carried out, in amplitude and phase, between the experimental APSF (upper image: 14 a)) and the APSF calculated as a wavefront propagated from the output pupil, where accurate aberration coefficients have been computed from the wavefront measured with CCD2 (down image: 14 c)). In the middle image of Fig. 14, 14b), the APSF calculated with the Gibson and Lanni model is shown for comparison. From Fig. 14, one can verify the excellent agreement between the APSF measured in the PO image region, the APSF computed with a scalar model of diffraction , and finally the APSF derived from the theoretical Gibson and Lanni model.

This work put to the fore that a reliable estimation of the complete 3D APSF can be finally obtained from a single acquisition of a digital hologram which provides, after reconstruction, the wavefront at the IOS output pupil. For the first time, the validity of the method is not only attested by the comparison with a well-known theoretical aberrations model, but also with a direct and quantitative measurement of the 3D APSF. The main advantage of the determination of the APSF from the hologram at the output pupil, over the technique based on the z scan of the point source, resides in the fact that a single hologram is required with the first technique, which therefore do not require any particular precaution concerning the stability of the instrumental setup. Furthermore, the acquisition time is drastically reduced, which is evidently a major asset of the described embodiment.

J) In another embodiment, the APSF measurement can be repeated at different points of the ROI. The short measuring time of the 3D-APSF from the hologram in the OIS output pupil according to embodiment C) and D), can be advantageously exploited to repeat the measurement for each point object in a subset of point in the ROI and test the space invariance hypothesis, or alternatively, to deliver a estimation of the full scalar APSF.

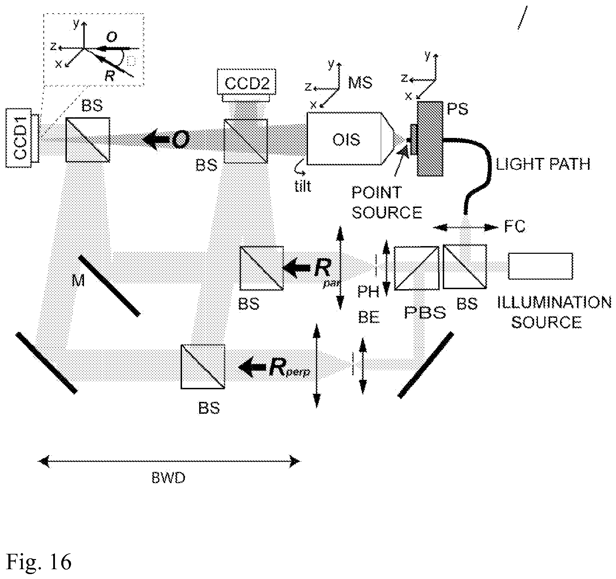

K) In another example, polarization state of the object beam is analyzed as well as the wavefront, in the wavefront sensing device, according to the basic concept of the method hereby disclosed . This goal can be achieved very elegantly, practically without doubling the equipment of the apparatus, by having the recourse to a double reference beam. A more detailed description of this clever technical approach can be found in the papers of Tristan Colomb et al, (Colomb 2002,2004,2005) where in it is shown that the use of two independent reference beam having orthogonal linear polarization properties can be used to form, with as single object beam, a single hologram which, as emphasized in the embodiment I) described above, can be acquired with a very short acquisition time. Additional noise due to vibrations and instabilities of the setup can therefore be avoided. Moreover, the simultaneous acquisition, on a single hologram of both polarization warrants the good interpretation of the polarization state of the object beam if this polarization state changes rapidly in time and space. This is a unique feature of the off-axis digital holographic technique implemented in the context of polarization state analysis. More detailed are given in Fig. 16, where it is shown that only the reference beam must be splitted, whereas the object beam and camera remain the same. Filtering out the contribution of each polarization state can be made easy by placing them in different quadrants of the Fourier plane of the hologram, (see ref. Colomb et al. 2002,2004,2005) The main achievement of that approach to the analysis of the polarization state of the object beam is that it can be used in combination with the 3D analysis of the APSF from the pupil hologram analysis disclosed in the embodiment B) and I). As such it can be performed at very high frame rate and provide a realistic and appealing solution to *the tensor 3D-APSF* determination , and further making feasible the concept of full *tensor-APSF* determination by a double scan approach (scan on the image space and point source space).

L) In another example, embodiment A),B) I)and K) can be combined in order to provide a method and an instrument capable of measuring simply and rapidly the tensor APSF:
The camera CCDI, the beamsplitter BS close to it, and the mirrors M can be merely ignored.
The two beam splitters BS reflecting the reference waves $R_{par}$ and $R_{perp}$ are then replaced by mirrors. The *tensor 3D-APSF* determination can be derived from the hologram taken in the IOS pupil plane with two reference waves $R_{par}$ and $R_{perp}$ having perpendicular polarization plane: the *tensor CTF can* be derived from the hologram by wavefront reconstruction and the *tensor-APSF* by Fourier transform.

M) In another embodiment, any one of the methods described in the embodiments A) to L) can be repeated at a plurality of wavelengths, Chromatic aberrations, in particular, can be deduced from these measurements.

N) In another embodiment, one or a combination of several embodiments described in points A) to M) can be implemented in an imaging microscope, such a Digital Holographic Microscope (DHM). In particular a procedure is proposed where a special test target can be used to provide a PO source with size below the diffraction limit of the microscope objective. Such test target must also generate a beam with well defined polarization state. A metallic diaphragm with very aperture smaller than the diffraction spot of the microscope objective and with an appropriate shape designed to preserve linear polarization will permit to reach the goal.

### 3. Typical achievements

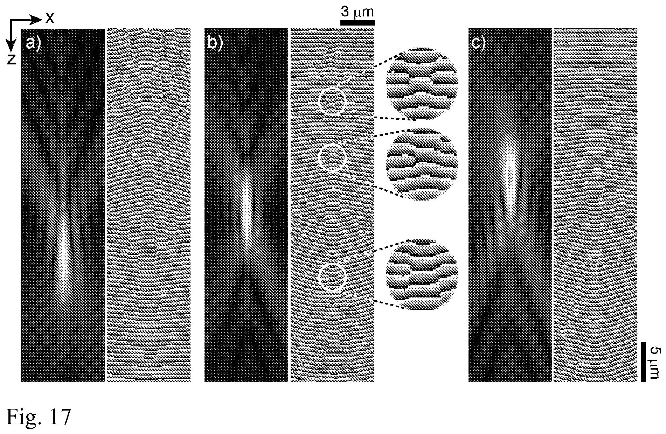

In order to illustrate the performance of the disclosed method and apparatus, 3D APSF measurements are presented. The example of a special MO will be taken. Some MO type permit the correction of aberration introduced by coverslips of different thickness, by means of an adjustable collar placed on the objective body. By turning the collar to a specific position, corresponding to some particular coverslip thickness, a slight displacement of some built-in lenses inside the microscope objective, introduces variety of aberrations ranging from positive to negative sphericity aberrations, covering therefore, the different possibilities encountered in using coverslips of various thickness. We have used such an objective in order to observe the spherical aberrations, which appear when the correction collar is turned from one extremity to the other.. The Measured MO was a long distance Achroplan x20 with a numerical aperture 0.4 and a correction corresponding to a coverslip thickness varying from 0 to 1.5 mm. The MO was mounted in the optical setup without coverslip and the axial APSF has been measured for three particular positions of the correction collar: 0, 0.5 and 1. For each of the three collar positions, a stack of 740 holograms was recorded, corresponding to a total axial scan of 44.4 $\mu$m with 60 nm steps. The holograms were reconstructed and new stacks containing the intensity and respectively the phase images were created, providing the 3D IPSF and respectively the 3D PPSF. The axial APSF is obtained by sectioning the new stacks longitudinally, whereas the transverse APSF is obtained by performing a transversal section at a specific axial position. The results are summarized in Fig.17.

We can observe that in the 0.5 collar position (Fig. 17b) the APSF is almost aberration-free, except maybe a small amount of spherical aberration which can be identified from the slight asymmetry. When the collar is turned symmetrically with respect to the central 0.5 position (Fig. 17a and Fig. 17c), we can observe a symmetrical shift and conjointly, the intensity of the central spot of the IPSF is distributed in the secondary lateral lobes, what is typical for the spherical aberration. Note that for the position 1 of the correction collar (Fig. 17c) the fringes on the holograms were slightly saturated at the maximal intensity position, due to a non-perfect adjustment of the CCD1 dynamic range, what explains the dark spot appearing in the center of the reconstructed intensity image. The axial shift during the collar turns is clearly observed and the shift distance may be used to quantify the amount of spherical aberration. This example also shows how the proposed method can be used to determine the best correction for given experimental conditions. The insets of Fig. 17 b) enhance the phase singularities, also called phase vortices or phase dislocations, appearing at the zero intensity points. These singularities are characterized, in a 2D representation, by a phase change of $\pm\pi$ on a closed path around the singularity: $\int d\varphi = \pm 2\pi$. Great attention has recently been paid to the structure of these zero-intensity point (Karman *et al.* 1998, Kreminskaya *et al.* 1998, Freund 2000, Gbur *et al.* 2002). Totzeck & Tiziani extensively and clearly described this phenomenon and its possible use in super-resolution imaging in their study of the 2D complex field diffracted by sub-wavelength structures (Totzeck & Tiziani, 1997). Walford *et al.* (Walford *et al.* 2002) or Dändliker *et al.* (Dändliker *et al.* 2004) also discussed these singularities in their measurement of a lens APSF and showed that the study of their 3D conformation can play a role in aberrations identification. Thanks to the shorter acquisition time required for a complete 3D APSF measurement with our system (1D scan vs 3D scan), the external noise sources including vibrations, air fluctuation or relative movements of the setup components, are minimized, the phase singularities more clearly identifiable in the 2D phase distributions. Furthermore, the presented measuring technique is applicable without restriction to high NA MO, as pointed out in the next paragraph.

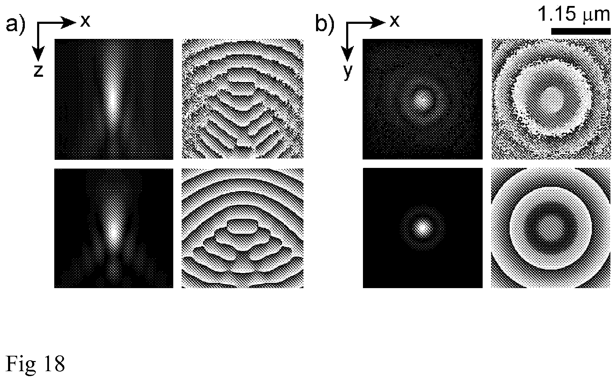

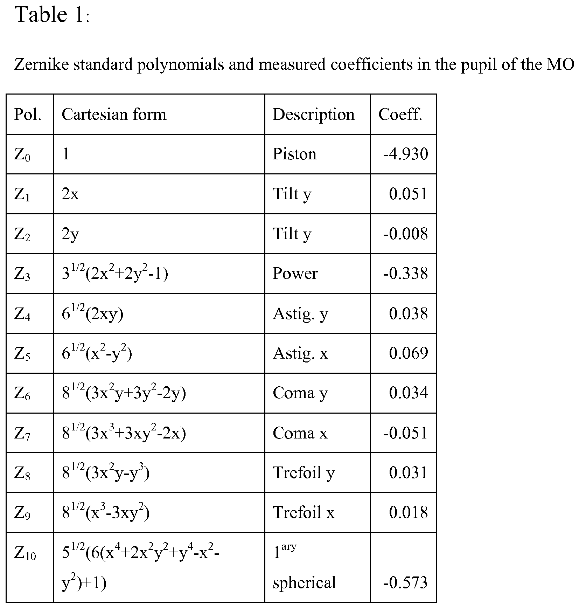

A more specific study has been conducted on an x100 MO with 1.3 numerical aperture. The ideal conditions of use for this MO, predicted by the manufacturer, are an immersion oil of 1.518 refractive index and a coverslip of 0.17 mm thickness with 1.525 refractive index. Ideally, the specimen is supposed to be placed immediately behind the coverslip. If the ideal conditions are satisfied, the measured APSF is perfectly axially symmetric, assuming no misalignment in the setup. It can be shown that any small deviation from the ideal parameters induces spherical aberrations and causes significant modifications in the APSF shape. In our measurements, we have chosen to perform the axial scan by moving the object (the NSOM point) instead of the MO. The measurements presented on Fig. 18 (top) were achieved without coverslip but using the ideal immersion oil. The Hologram stack was acquired with an axial step of 30.5 nm and reconstructed by using the process described in the embodiment.A).

Fig. 18a compares the measured axial APSF (top) with the theoretically computed axial APSF (bottom). The theoretical simulation was obtained by using the scalar Gibson model (Gibson & Lanni, 1991), adapted for the case when the axial scan is performed by moving the object instead of the MO. Normally the use of a vectorial model, taking into account the polarization of light is more suitable to calculate the APSF of such a high numerical aperture MO, notably to reproduce the circular asymmetry of the radial APSF. But, in the present work, the scalar model reveals itself sufficient as the light outgoing the NSOM fiber tip is not linearly polarized: in the case of an unpolarized or weakly-polarized or elliptically polarized beam, an average between all the polarization states occurs and the symmetry is preserved. Therefore, the scalar model can be adequately used, and one can benefit from its speed advantages for calculations. The z-step in the simulation was 10 nm, which allows explaining the theoretical smoother phase image. The intensity was normalized and the gray levels were distributed non-linearly to enhance low intensity details. The phase was wrapped, taking values between 0 and $2\pi$ radians. As expected, the axial APSF is asymmetric, due to spherical aberrations caused by the absence of coverslip. The transverse APSF, obtained by transverse sectioning of the 3D APSF in the plane corresponding to the axial IPSF maximum value, is shown in Fig. 18b: measurement (top) and theoretical simulation (bottom). The Airy pattern is clearly visible both in the amplitude and phase images, with its central disk and the surrounding rings. As expected, phase $\pi$-jumps are observed at each passage through the amplitude minima. Due to the presence of spherical aberration, the phase is not constant but decreases smoothly toward the center inside the regions delimited by the Airy rings. As one can see from Fig. 18, the analytical model and the measured data are in excellent agreement, assessing the prediction of the Gibson & Lanni approach for calculating the aberrations due to a non-designed use of the MO.

**Bibliography:**

**Patent literature :**

Cuche E. and Depeursinge C (P 07 Oct 1998).WO2000/20929

**Other Publications**

Agard, D.A. (1984) Optical sectioning microscopy: cellular architecture in three dimensions. Ann. Rev. Biophys. Bioeng. 13, 191-219.

Agard, D.A. et al. (1989) Fluorescence microscopy in three dimensions. Methods in Cell Biology, Fluorescence Microscopy of Living Cells in Culture (ed. by D.L. Taylor and Y.Wang), pp. 353-377. Academic Press., San Diego.

Beverage, J.L. et al. (2002) Measurement of the three-dimensional microscope point spread function using a Shack-Hartmann wavefront sensor. Journal of Microscopy 205, 61-75. Born, M. & Wolf, E. (1980) Principles of optics. Pergamon.

Braat,J. J. M. DirksenP., Janssen,A. van Haver S. and van de Nes,A. S. Extended Nijboer-Zernike approach to aberration and birefringence retrieval in a high-numerical-aperture optical system, Journal of the Optical Society of America a-Optics Image Science and Vision, (2005), Vol. 22(12), p. 2635-2650.

Braat,J. J. M. DirksenP., Janssen A. and van de Nes, A. S. Extended Nijboer-Zernike representation of the vector field in the focal region of an aberrated high-aperture optical system, Journal of the Optical Society of America a-Optics Image Science and Vision, (2003), Vol. 20(12), p. 2281-2292.

Castaneda,R. & Kross, J. (1994) PSF measurement using an Airy pattern as test object. Pure Appl. Opt. 3, 259-268.

Charrière, F. (to be submitted) Shot noise influence in reconstructed phase images SNR in digital holographic microscopy.

Charrière, F. et al. (2006) Characterization of microlenses by digital holographic microscopy. Appl. Opt. to be published

Colomb, T. Cuche,E. Montfort,F. MarquetP. and. Depeursinge,C (2004) Jones vector imaging by use of digital holography: simulation and experimentation, Optics Co mmunications, , Vol. 231(1-6), p. 137-147.

Colomb, T. Dürr, F. Cuche, E.. Marquet, P. Limberger, H. G. Salathe R. P and Depeursinge, C. (2005) Polarization microscopy by use of digital holography: application to optical-fiber birefringence measurements, Applied Optics, , Vol. 44(21),

Colomb T. Dahlgren P. Beghuin D. Cuche, E. Marquet P. and Depeursinge, C. (2002) Polarization imaging by use of digital holography, Applied Optics, , Vol. 41(1), p. 27-37.

Colomb, T. et al. (2006) Automatic procedure for aberrations compensation in digital holographic microscopy and applications to specimen shape compensation. Appl. Opt. 45 851-863.

Cuche, E et al. (1999) Digital holography for quantitative and phase-contrast imaging. Opt. Lett. 24, 291-293.

Cuche, E. et al. (1999) Simultaneous amplitude-contrast and quantitative phase-contrast microscopy by numerical reconstruction of Fresnel off-axis holograms. Appl. Opt. 38, 6994-7001.

Cuche, E. (2000) Numerical reconstruction of digital holograms: applications to phase-contrast imaging and microscopy. PhD thesis, EPFL, Lausanne.

Cuche, E. et al. (2000) Spatial filtering for zero order and twin-image elimination in digital off-axis holography. Appl. Opt. 39, 4070-4075.

de Monvel, J.B. et al. (2003) Image-adaptive deconvolution for three-dimensional deep biological imaging. Biophys. J. 85, 3991-4001.

Dändliker, R. et al. (2004) Measuring optical phase singularities at subwavelength resolution. J. Opt. A 6, 189-196.

De Nicola, S. et al. "Angular spectrum method with correction of anamorphism for numerical reconstruction of digital holograms on tilted planes," Opt. Express, 13, 9935-9940 (2005).

De Nicola, S. et al.(2005) "Recovering correct phase information in multiwavelength digital holographic microscopy by compensation for chromatic aberrations," Opt. Lett., 30, 2706-2708 .

De Nicola, S. et al. "Correct-image reconstruction in the presence of severe anamorphism by means of digital holography," Opt. Lett., 26, 974-976 (2001).

De Nicola, S. et al. "Wave front reconstruction of Fresnel off-axis holograms with compensation of aberrations by means of phase-shifting digital holography," Optics and Lasers in Engineering, 37, 331-340 (2002).

Farnell, G.F. (1957) Calculated intensity and phase distribution in the image space of a microwave lens. Canad. J. Phys. 35, 777-783.

Farnell, G.F. (1958) Measured phase distribution in the image space of a microwave lens. Canad. J. Phys. 36, 935-943.

Farnell, G.F. (1958) On the axial phase anomaly for microwave lenss. J. Opt. Soc. Am. A. 48, 643-647.

Ferraro, P. et al. "Compensation of the inherent wave front curvature in digital holographic coherent microscopy for quantitative phase-contrast imaging," Appl. Opt., 42, 1938-1946 (2003).

Gibson, S.F. & Lanni, F. (1990) Measured and analytical point spread functions of the optical microscope for use in 3-D optical serial sectioning microscopy. Optical Microscopy for Biology (ed. by B. Herman and K. Jacobson), pp. 109-118.

Gibson, S.F. & Lanni, F. (1991) Experimental test of an analytical model of aberration in an oil-immersion objective lens used in three-dimensional light microscopy. J. Opt. Soc. Am. A 8, 1601-1613.

Gibson, S.F. & Lanni, F. (1989) Diffraction by a circular aperture as a model for three-dimensional optical microscopy. J. Opt. Soc. Am. A 6, 1357-1367.

Goodman, J.W. (1968) Introduction to Fourier Optics, McGraw-Hill, San Francisco.

Grilli, S. et al. Whole optical wavefields reconstruction by digital holography, Opt. Express, 9, 294-302 (2001).

Gu, M. Advanced optical imaging theory, Springer Verlag, 2000.

Haeberle, O. (2004) Focusing of light through a stratified medium: a practical approach for computing microscope point spread functions. Part II: Confocal and multiphoton microscopy. Opt. Commun. 235, 1-10.

Haeberle, O. (2003) Focusing of light through a stratified medium: a practical approach for computing microscope point spread functions. Part I: Conventional microscopy. Opt. Commun. 216, 55-63.

Haeberle, O. et al. (2001) Identification of acquisition parameters from the point spread function of a fluorescent microscope. Optics Communications 196, 109-117.

Hanser, B.M. et al. (2004) Phase-retrieved pupil functions in wide-field fluorescence microscopy. Journal of Microscopy 216, 32-48.

Heil, J. Wesner, J. Müller W. and Sure, T. (2003)"Artificial star test by real-time video holography for the adjustment of high-numerical-aperture micro-objectives", Appl. Opt. 42, 5073-5085 .

Hiraoka, Y. & Sedat, J.W. (1990) Determination of three-dimensional imaging properties of a light microscope system. Biophys. J. 57, 325-333.

Hiraoka, Y. et al. (1987) The use of an charge-coupled device for quantitative optical microscopy of biological structures. Science 238, 36-41.

Juskaitis, R (2003) Characterizing high numerical aperture microscope objective lenses. Optical imaging and microscopy (ed. By P. Torok and F.-J. Kao), pp. 21-43. Springer Verlag.

Juskaitis, R. & Wilson, T. (1998) The measurement of the amplitude point spread function of microscope objective lenses. Journal of Microscopy 189, 8-11.

Kant, R. (1993) An analytical solution of vector diffraction for focusing optical systems. J. Modern Optics 40, 337-347.

Keller, H.E. (1990) Objective lenses for confocal microscopy Handbook of biological confocal microscopy (ed. by J. B. Pawley), Plenum Press.

Kontoyannis, N.S. & Lanni, F. (1996) Measured and computed point spread functions for an indirect water immersion objective used in three-dimensional fluorescence microscopy. Three-Dimensional Microscopy: Image Acquisition and Processing III (ed. by C. J. Cogswell et al.), pp. 34-42.

Larkin, K.G. & Sheppard, C.J.R. (1999) Direct method for phase retrieval from the intensity of cylindrical wave fronts.

J. Opt. Soc. Am. A 16, 1838-1844.

Li, Y. (1985) The anomalous propagation of phase in the focus: a re-examination, Opt. Comm. 53, 359-363.

Linfoot, B.E. & Wolf, E. (1956) Phase distribution near focus in an aberration-free diffraction image. Proc. Phys. Royal Soc. B, LXIX, 823-832.

Malacara, D. & De Vore, S.L. (1992) Interferogram evaluation and wavefront techniques Optical Shop Testing (ed. by D. Malacara), pp. Wiley, New York.

Mahajan, V.N (1991) Aberration theory made simple. SPIE Optical Engineering Press.

Mahajan, V.N. (1991) Optical imaging and aberrations. Part II Wave diffraction optics. SPIE Optical Engineering Press.

Mansuripur, M. (1989) Certain computational aspects of vector diffraction problems. J. Opt. Soc. Am. A 6, 786-805.

Mansuripur, M. (2002) Classical optics and its applications. Cambridge University Press. Marian, A. (2005) Measurement and interpretation of the 3D amplitude point spread function of lenses and microscope objectives. PhD thesis, EPFL, Lausanne (unpublished).

Marian, A. & Depeursinge, C. (2004) Point spread function models for digital holographic microscopy. Three-Dimensional and Multidimensional Microscopy: Image Acquisition and Processing XI (ed. by J.-A. Conchello et al.), pp. 134-144. Proc. SPIE Vol. 5324.

Marquet, P. Rappaz, B. Magistretti, P. J. Cuche, E. Emery, Y. Colomb T. and Depeursinge, C. (2005) "Digital holographic microscopy: a noninvasive contrast imaging technique allowing quantitative visualization of living cells with subwavelength axial accuracy", Opt. Lett., 30, 468-470.

McNally, J.G. et al. (1994) Artifacts in computational optical microscopy. J. Opt. Soc. Am. A 11, 1056-1067.

McNally, J.G. et al. (1999) Three-dimensional imaging by deconvolution microscopy. Methods 19,373-385.

Mills, J.P. & Thompson, B.J. (1986) Effect of aberrations and apodization on the performance of coherent optical systems. I. The amplitude impulse response. J. Opt. Soc. Am. A 3, 694-703.

Pedrini, G. et al. "Aberration compensation in digital holographic reconstruction of microscopic objects," J. Mod. Opt., 48, 1035-1041 (2001).

Preza, C. et al. (1992) Point-spread sensitivity analysis for computational optical-sectioning microscopy. Micron and Microscopica Acta 23, 501-513.

Richards, B. & E. Wolf, E. (1959) Electromagnetic diffraction in optical systems II. Structure of the image field in an aplanatic system. Proc. Royal Soc. A 253, 358-379.

Schnars, U. & Jueptner, W.P.O. (2002) Digital recording and numerical reconstruction of holograms. Measurement Science and Technology 13, R85-R101.

Schrader, M. & Hell, S.W. (1996) Wavefronts in the focus of a light microscope. Journal of Microscopy 184, 143-148.

Selligson, J.L. (1981) Phase measurement in the focal region of an aberrated lens. PhD thesis, University of Rochester, New York.

Shaw, P. & Rawlins, D.J. (1991) The point-spread function of a confocal microscope: its measurement and use in deconvolution of 3-D data. Journal of Microscopy 163, 151-165.Benford, J.R. (1965) Microscope objectives. Applied Optics and Engineering 3 (ed. by R. Kinkslake), Academic Press.

Sheppard, C.J.R. (2000) Validity of the Debye approximation. Opt. Lett. 25, 1660-1662.

Stadelmaier, A. & Massig, J.H. (2000) Compensation of lens aberrations in digital holography, Opt. Lett., 25, 1630-1632 .

Török P. and Fu-Jen, K. (2002) Point-spread function reconstitution in high aperture lenses focusing ultra-short laser pulses, Opt. Comm. 213, 97-102 .

Török, P. (1999) Focusing of electromagnetic waves through dielectric interfaces: theory and correction of aberration. Optical Memory and Neural Networks 8, 9-24.

Török, P. & Varga, P. (1997) Electromagnetic diffraction of light focused through a stratified medium. Appl. Opt. 36, 2305-2312.

Török, P. & Varga, P. (1995) Electromagnetic diffraction of light focused through a planar interface between materials of mismatched refractive indices: an integral representation. J. Opt. Soc. Am. A 12, 325-332.

Waldman GS,Wootton JR,Holder D (1995) Imaging transfer function in the Fresnel approximation, Optical Engineering 34,6,1818-1825..

Walford, J.N. et al. (2002) High-resolution phase imaging of phase singularities in the focal region of a lens, Opt. Let. 27, 345-347.

Wolf, E. & Li, Y. (1981) Conditions for the validity of the Debye integral representations of focused fields. Opt. Commun. 39, 205-210.

Wolf, E. (1959) Electromagnetic diffraction in optical systems I. An integral representation of the image field. Proc. Royal Soc. A 253, 349-357.

**Claims**

1. 3D complex Amplitude Point Spread Function, APSF, measurement apparatus for the measurement of the 3D complex Amplitude Point Spread Function, APSF, of an Optical Imaging System (OIS) having a real output pupil downstream, the apparatus comprising:

   a) A coherent illumination source,
   b) A point object, PO, to be irradiated by said coherent illumination source,
   c) A Wavefront Sensing Device,
   d) The Optical Imaging System (OIS) for collecting an object beam coming from said point object and transmitting said object beam to the Wavefront Sensing Device,
   said Wavefront Sensing Device being further configured to receive a reference beam coming from said illumination source,
   e) A computer with processing means configured to acquire data from said Wavefront Sensing Device and to compute the 3D complex Amplitude Point Spread Function,

   and wherein

   - said Wavefront Sensing Device comprises a digital camera located close to the output pupil of the Optical Imaging System (OIS), in the so-called Frauenhofer diffraction regime with respect to the image of the Point Object,
   - said digital camera is configured to record a hologram called proximal hologram created by interference between said reference beam and said object beam,
   - from said proximal hologram, said computer is configured to provide a measure of the complex scalar electromagnetic wavefront of said object beam,

   wherein the computer is further configured to compute a 3D complex Amplitude Point Spread Function using a single recorded proximal hologram,
   and in that the computer is further configured to reconstruct a wavefront of the object beam from said proximal hologram, to decompose said wavefront of the object beam in a series of Zernike polynomials fitting the wavefront, derive aberration coefficients from coefficients of the lowest order Zernike polynomials and compute the 3D complex APSF according to the scalar or vectorial theory of diffraction from the series of Zernike polynomials fitting the wavefront.

2. A method for the measurement of the 3D complex Amplitude Point Spread Function of an Optical Imaging System including the step of providing the apparatus of claim 1, and wherein said proximal hologram is processed as follows:

   - a wavefront of the object beam is reconstructed from said proximal hologram taken close to the output pupil plane,
   - said wavefront of the object beam is decomposed in a series of Zernike polynomials fitting the wavefront, up to the order compatible with the precision requirements and practical considerations such as computing time,
   - the aberration coefficients are derived from the coefficients of the lowest order Zernike polynomials,
   - the 3D complex APSF is computed according to the scalar or vectorial theory of diffraction from the series of Zernike polynomials fitting the wavefront,

   wherein the 3D complex APSF is directly given by the wavefront in a focal region, computed as the vectorial wavefront propagated from the output pupil by the vector theory of diffraction.

3. The method according to the previous claim wherein the wavelength of the illuminating source is varied in order to quantify chromatic aberrations.

4. The method according to anyone of previous claims 2 to 3 wherein said Amplitude Point Spread Function enables to obtain:

   - a Phase Point Spread Function by taking the argument of said Amplitude Point Spread Function,
   - an Intensity Point Spread Function ,IPSF, by taking the square of the modulus of said APSF,
   - a Coherent Transfer Function ,CTF, by calculating the 3D Fourier transform of said Amplitude Point Spread Function,

5. Use of the method according to anyone of claims 2 to 4 in a Digital Holographic Microscope, DHM, and wherein the Optical Imaging System (OIS) comprises a microscope objective.

**Patentansprüche**

1. Komplexe 3D-Amplitudenpunkt-Spreizfunktions-, APSF-, Messvorrichtung zur Messung der komplexen 3D-Amplitudenpunkt-Spreizfunktion, APSF, eines optischen Bildgebungssystems (OIS - Optical Imaging System) mit einer nachgeschalteten realen Ausgangspupille, wobei die Vorrichtung umfasst:

   a) eine kohärente Beleuchtungsquelle,
   b) ein durch die kohärente Beleuchtungsquelle zu bestrahlendes Punktobjekt, PO,
   c) eine Wellenfronterfassungseinrichtung,
   d) das optische Bildgebungssystem (OIS) zum Sammeln eines von dem Punktobjekt kommenden Objektstrahls und Übertragen des Objektstrahls zu der Wellenfronterfassungseinrichtung,
   wobei die Wellenfronterfassungseinrichtung weiterhin dafür ausgebildet ist, einen von der Beleuchtungsquelle kommenden Referenzstrahl zu empfangen,
   e) einen Computer mit Bearbeitungsmitteln, ausgebildet zum Erfassen von Daten von der Wellenfronterfassungseinrichtung und zum Berechnen der komplexen 3D-Amplitudenpunkt-Spreizfunktion,

   und wobei

   - die Wellenfronterfassungseinrichtung eine digitale Kamera umfasst, die sich nahe an der Ausgangspupille des optischen Bildgebungssystems (OIS) befindet, in der sogenannten Fraunhofer-Beugungsordnung bezüglich des Bilds des Punktobjekts,
   - die digitale Kamera dafür ausgebildet ist, ein Hologramm aufzuzeichnen, das als proximales Hologramm bezeichnet wird, das durch Interferenz zwischen dem Referenzstrahl und dem Objektstrahl erzeugt wird,
   - der Computer dafür ausgebildet ist, aus dem proximalen Hologramm ein Maß für die komplexe skalare elektromagnetische Wellenfront des Objektstrahls bereitzustellen,

   wobei der Computer weiter dafür ausgebildet ist, unter Verwendung eines einzelnen aufgezeichneten proximalen Hologramms eine komplexe 3D-Amplitudenpunkt-Spreizfunktion zu berechnen,
   und dass der Computer weiterhin dafür ausgebildet ist, eine Wellenfront des Objektstrahls aus dem proximalen Hologramm zu rekonstruieren, die Wellenfront des Objektstrahls in eine Reihe von der Wellenfront entsprechenden Zernike-Polynomen zu zerlegen, Aberrationskoeffizienten von Koeffizienten der Zernike-Polynome niedrigster Ordnung abzuleiten und die komplexe 3D-APSF gemäß der skalaren oder vektoriellen Theorie der Brechung aus der Reihe der Wellenfront entsprechenden Zernike-Polynomen zu berechnen.

2. Verfahren für die Messung der komplexen 3D-Amplitudenpunkt-Spreizfunktion eines optischen Bildgebungssystems einschließlich des Schritts des Bereitstellens der Vorrichtung von Anspruch 1, und wobei das proximale Hologramm wie folgt verarbeitet wird:

   - eine Wellenfront des Objektstrahls wird aus dem nahe der Ausgangspupillenebene genommenen proximalen Hologramm rekonstruiert,
   - die Wellenfront des Objektstrahls wird in eine Reihe von der Wellenfront entsprechenden Zernike-Polynomen zerlegt, bis zu der mit den Präzisionsanforderungen und praktischen Überlegungen wie etwa Rechenzeit kompatiblen Ordnung,
   - die Aberrationskoeffizienten werden von den Koeffizienten der Zernike-Polynome niedrigster Ordnung abgeleitet,
   - die komplexe 3D-APSF wird gemäß der skalaren oder vektoriellen Theorie der Brechung aus der Reihe von der Wellenfront entsprechenden Zernike-Polynomen berechnet, wobei

   die komplexe 3D-APSF direkt durch die Wellenfront in einem Brennbereich gegeben ist, berechnet als die von der Ausgangspupille durch die Vektortheorie der Brechung ausgebreitete vektorielle Wellenfront.

3. Verfahren nach dem vorhergegangenen Anspruch, wobei die Wellenlänge der beleuchtenden Quelle variiert wird, um chromatische Aberrationen zu quantifizieren.

4. Verfahren nach einem der vorhergehenden Ansprüche 2 bis 3, wobei die Amplitudenpunkt-Spreizfunktion ermöglicht, Folgendes zu erhalten:

   - eine Phasenpunkt-Spreizfunktion durch Nehmen des Arguments der Amplitudenpunkt-Spreizfunktion,
   - eine Intensitätspunkt-Spreizfunktion, IPSF, durch Nehmen des Quadrats des Moduls der APSF,
   - eine kohärente Transferfunktion, CTF, durch Berechnen der 3D-Fourier-Transformierten der Amplitudenpunkt-Spreizfunktion.

5. Verwendung des Verfahrens nach einem der Ansprüche 2 bis 4 in einem digitalen holografischen Mikroskop, DHM, und wobei das optische Bildgebungssystem (OIS) ein Mikroskopobjektiv umfasst.

**Revendications**

1. Appareil de mesure de fonction d'étalement du point d'amplitude, APSF, 3D complexe, pour la mesure de la fonction d'étalement du point d'amplitude, APSF, 3D complexe d'un système d'imagerie optique (OIS) ayant une pupille de sortie réelle en aval, l'appareil comprenant :

   a) une source d'éclairage cohérent,
   b) un point objet, PO, devant être irradié par ladite source d'éclairage cohérent,
   c) un dispositif de détection de front d'onde,
   d) le système d'imagerie optique (OIS) pour collecter un faisceau objet provenant dudit point objet et transmettre ledit faisceau objet au dispositif de détection de front d'onde,
   ledit dispositif de détection de front d'onde étant également configuré pour recevoir un faisceau de référence provenant de ladite source d'éclairage,
   e) un ordinateur avec des moyens de traitement configurés pour acquérir des données provenant dudit dispositif de détection de front d'onde et pour calculer la fonction d'étalement du point d'amplitude 3D complexe, et dans lequel

   - ledit dispositif de détection de front d'onde comprend une caméra numérique située près de la pupille de sortie du système d'imagerie optique (OIS), dans le régime de diffraction dit de Frauenhofer par rapport à l'image du point objet,
   - ladite caméra numérique est configurée pour enregistrer un hologramme appelé hologramme proximal créé par interférence entre ledit faisceau de référence et ledit faisceau objet,
   - à partir dudit hologramme proximal, ledit ordinateur est configuré pour fournir une mesure du front d'onde électromagnétique scalaire complexe dudit faisceau objet,
   dans lequel l'ordinateur est également configuré pour calculer une fonction d'étalement du point d'amplitude 3D complexe en utilisant un seul hologramme proximal enregistré,
   et en ce que l'ordinateur est également configuré pour reconstruire un front d'onde du faisceau objet à partir dudit hologramme proximal, pour décomposer ledit front d'onde du faisceau objet en une série de polynômes de Zernike lissant le front d'onde, déduire des coefficients d'aberration à partir de coefficients des polynômes de Zernike d'ordre le plus bas et calculer l'APSF 3D complexe selon la théorie scalaire ou vectorielle de diffraction à partir de la série de polynômes de Zernike lissant le front d'onde.

2. Procédé de mesure de la fonction d'étalement du point d'amplitude 3D complexe d'un système d'imagerie optique comportant l'étape d'obtention de l'appareil de la revendication 1, et dans lequel ledit hologramme proximal est traité comme suit :

   - un front d'onde du faisceau objet est reconstruit à partir dudit hologramme proximal pris près du plan de la pupille de sortie,
   - ledit front d'onde du faisceau objet est décomposé en une série de polynômes de Zernike lissant le front d'onde, jusqu'à l'ordre compatible avec les exigences de précision et des considérations pratiques telles que le temps de calcul,
   - les coefficients d'aberration sont déduits à partir des coefficients des polynômes de Zernike d'ordre le plus bas,
   - l'APSF 3D complexe est calculée selon la théorie scalaire ou vectorielle de diffraction à partir de la série de polynômes de Zernike lissant le front d'onde, dans lequel l'APSF 3D complexe est directement donnée par le front d'onde dans une région focale, calculé comme le front d'onde vectoriel propagé depuis la pupille de sortie par la théorie vectorielle de diffraction.

**3.** Procédé selon la revendication précédente dans lequel on fait varier la longueur d'onde de la source d'éclairage afin de quantifier des aberrations chromatiques.

**4.** Procédé selon l'une quelconque des revendications 2 à 3 précédentes dans lequel ladite fonction d'étalement du point d'amplitude permet d'obtenir :

- une fonction d'étalement du point de phase en prenant l'argument de ladite fonction d'étalement du point d'amplitude,
- une fonction d'étalement du point d'intensité, IPSF, en prenant le carré du module de ladite APSF,
- une fonction de transfert cohérente, CTF, en calculant la transformée de Fourier 3D de ladite fonction d'étalement du point d'amplitude.

**5.** Utilisation du procédé selon l'une quelconque des revendications 2 à 4 dans un microscope holographique numérique, DHM, et dans laquelle le système d'imagerie optique (OIS) comprend un objectif de microscope.

Fig. 1

Fig. 2

Fig. 3

Fig. 4 .

Fig. 5

Fig. 6

a)

b)

Fig. 7

Fig.8

Fig.9

Fig. 10

Fig.11

Fig. 12.

Fig. 13.

Fig. 14 .

Fig.15.

Fig. 16

Fig. 17

Fig 18

Table 1:

Zernike standard polynomials and measured coefficients in the pupil of the MO

| Pol. | Cartesian form | Description | Coeff. |
|---|---|---|---|
| $Z_0$ | 1 | Piston | -4.930 |
| $Z_1$ | 2x | Tilt y | 0.051 |
| $Z_2$ | 2y | Tilt y | -0.008 |
| $Z_3$ | $3^{1/2}(2x^2+2y^2-1)$ | Power | -0.338 |
| $Z_4$ | $6^{1/2}(2xy)$ | Astig. y | 0.038 |
| $Z_5$ | $6^{1/2}(x^2-y^2)$ | Astig. x | 0.069 |
| $Z_6$ | $8^{1/2}(3x^2y+3y^2-2y)$ | Coma y | 0.034 |
| $Z_7$ | $8^{1/2}(3x^3+3xy^2-2x)$ | Coma x | -0.051 |
| $Z_8$ | $8^{1/2}(3x^2y-y^3)$ | Trefoil y | 0.031 |
| $Z_9$ | $8^{1/2}(x^3-3xy^2)$ | Trefoil x | 0.018 |
| $Z_{10}$ | $5^{1/2}(6(x^4+2x^2y^2+y^4-x^2-y^2)+1)$ | 1$^{ary}$ spherical | -0.573 |

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 200020929 A, Cuche & Depeursinge

**Non-patent literature cited in the description**

- **AGARD, D.A.** Optical sectioning microscopy: cellular architecture in three dimensions. *Ann. Rev. Biophys. Bioeng.,* 1984, vol. 13, 191-219
- Fluorescence microscopy in three dimensions. **AGARD, D.A. et al.** Methods in Cell Biology, Fluorescence Microscopy of Living Cells in Culture. Academic Press, 1989, 353-377
- **BEVERAGE, J.L. et al.** Measurement of the three-dimensional microscope point spread function using a Shack-Hartmann wavefront sensor. *Journal of Microscopy,* 2002, vol. 205, 61-75
- **BORN, M. ; WOLF, E.** Principles of optics. Pergamon, 1980
- **BRAAT, J. J. M. ; DIRKSEN P. ; JANSSEN, A. ; VAN HAVER S. ; VAN DE NES, A. S.** Extended Nijboer-Zernike approach to aberration and birefringence retrieval in a high-numerical-aperture optical system. *Journal of the Optical Society of America a-Optics Image Science and Vision,* 2005, vol. 22 (12), 2635-2650
- **BRAAT, J. J. M ; DIRKSEN P. ; JANSSEN A. ; VAN DE NES, A. S.** Extended Nijboer-Zernike representation of the vector field in the focal region of an aberrated high-aperture optical system. *Journal of the Optical Society of America a-Optics Image Science and Vision,* 2003, vol. 20 (12), 2281-2292
- **CASTANEDA, R. ; KROSS, J.** PSF measurement using an Airy pattern as test object. *Pure Appl. Opt.,* 1994, vol. 3, 259-268
- **CHARRIÈRE, F.** *Shot noise influence in reconstructed phase images SNR in digital holographic microscopy*
- **CHARRIÈRE, F. et al.** Characterization of microlenses by digital holographic microscopy. *Appl. Opt.,* 2006
- **COLOMB, T. ; CUCHE, E. ; MONTFORT, F. ; MARQUET P. ; DEPEURSINGE, C.** Jones vector imaging by use of digital holography: simulation and experimentation. *Optics Co mmunications,* 2004, vol. 231 (1-6), 137-147

- **COLOMB, T. DÜRR ; F. CUCHE, E. ; MARQUET, P. LIMBERGER ; H. G. SALATHE R. P ; DEPEURSINGE, C.** Polarization microscopy by use of digital holography: application to optical-fiber birefringence measurements. *Applied Optics,* 2005, vol. 44 (21
- **COLOMB T. ; DAHLGREN P. ; BEGHUIN D. ; CUCHE, E. ; MARQUET P. ; DEPEURSINGE, C.** Polarization imaging by use of digital holography. *Applied Optics,* 2002, vol. 41 (1), 27-37
- **COLOMB, T. et al.** Automatic procedure for aberrations compensation in digital holographic microscopy and applications to specimen shape compensation. *Appl. Opt.,* 2006, vol. 45, 851-863
- **CUCHE, E et al.** Digital holography for quantitative and phase-contrast imaging. *Opt. Lett.,* 1999, vol. 24, 291-293
- **CUCHE, E. et al.** Simultaneous amplitude-contrast and quantitative phase-contrast microscopy by numerical reconstruction of Fresnel off-axis holograms. *Appl. Opt.,* 1999, vol. 38, 6994-7001
- **CUCHE, E.** Numerical reconstruction of digital holograms: applications to phase-contrast imaging and microscopy. *PhD thesis, EPFL,* 2000
- **CUCHE, E. et al.** Spatial filtering for zero order and twin-image elimination in digital off-axis holography. *Appl. Opt.,* 2000, vol. 39, 4070-4075
- **DE MONVEL, J.B. et al.** Image-adaptive deconvolution for three-dimensional deep biological imaging. *Biophys. J.,* 2003, vol. 85, 3991-4001
- **DÄNDLIKER, R. et al.** Measuring optical phase singularities at subwavelength resolution. *J. Opt. A,* 2004, vol. 6, 189-196
- **DE NICOLA, S. et al.** Angular spectrum method with correction of anamorphism for numerical reconstruction of digital holograms on tilted planes. *Opt. Express,* 2005, vol. 13, 9935-9940
- **DE NICOLA, S. et al.** Recovering correct phase information in multiwavelength digital holographic microscopy by compensation for chromatic aberrations. *Opt. Lett.,* 2005, vol. 30, 2706-2708

- **DE NICOLA, S. et al.** Correct-image reconstruction in the presence of severe anamorphism by means of digital holography. *Opt. Lett.,* 2001, vol. 26, 974-976
- **DE NICOLA, S. et al.** Wave front reconstruction of Fresnel off-axis holograms with compensation of aberrations by means of phase-shifting digital holography. *Optics and Lasers in Engineering,* 2002, vol. 37, 331-340
- **FARNELL, G.F.** Calculated intensity and phase distribution in the image space of a microwave lens. *Canad. J. Phys.,* 1957, vol. 35, 777-783
- **FARNELL, G.F.** Measured phase distribution in the image space of a microwave lens. *Canad. J. Phys.,* 1958, vol. 36, 935-943
- **FARNELL, G.F.** On the axial phase anomaly for microwave lenss. *J. Opt. Soc. Am. A.,* 1958, vol. 48, 643-647
- **FERRARO, P. et al.** Compensation of the inherent wave front curvature in digital holographic coherent microscopy for quantitative phase-contrast imaging. *Appl. Opt.,* 2003, vol. 42, 1938-1946
- Measured and analytical point spread functions of the optical microscope for use in 3-D optical serial sectioning microscopy. **GIBSON, S.F. ; LANNI, F.** Optical Microscopy for Biology. 1990, 109-118
- **GIBSON, S.F. ; LANNI, F.** Experimental test of an analytical model of aberration in an oil-immersion objective lens used in three-dimensional light microscopy. *J. Opt. Soc. Am. A,* 1991, vol. 8, 1601-1613
- **GIBSON, S.F. ; LANNI, F.** Diffraction by a circular aperture as a model for three-dimensional optical microscopy. *J. Opt. Soc. Am. A,* 1989, vol. 6, 1357-1367
- **GOODMAN, J.W.** Introduction to Fourier Optics. McGraw-Hill, 1968
- **GRILLI, S. et al.** Whole optical wavefields reconstruction by digital holography. *Opt. Express,* 2001, vol. 9, 294-302
- **GU, M.** Advanced optical imaging theory. Springer Verlag, 2000
- **HAEBERLE, O.** Focusing of light through a stratified medium: a practical approach for computing microscope point spread functions. Part II: Confocal and multiphoton microscopy. *Opt. Commun.,* 2004, vol. 235, 1-10
- **HAEBERLE, O.** Focusing of light through a stratified medium: a practical approach for computing microscope point spread functions. Part I: Conventional microscopy. *Opt. Commun.,* 2003, vol. 216, 55-63
- **HAEBERLE, O. et al.** Identification of acquisition parameters from the point spread function of a fluorescent microscope. *Optics Communications,* 2001, vol. 196, 109-117

- **HANSER, B.M. et al.** Phase-retrieved pupil functions in wide-field fluorescence microscopy. *Journal of Microscopy,* 2004, vol. 216, 32-48
- **HEIL, J. WESNER ; J. MÜLLER W. ; SURE, T.** Artificial star test by real-time video holography for the adjustment of high-numerical-aperture micro-objectives. *Appl. Opt.,* 2003, vol. 42, 5073-5085
- **HIRAOKA, Y. ; SEDAT, J.W.** Determination of three-dimensional imaging properties of a light microscope system. *Biophys. J.,* 1990, vol. 57, 325-333
- **HIRAOKA, Y. et al.** The use of an charge-coupled device for quantitative optical microscopy of biological structures. *Science,* 1987, vol. 238, 36-41
- Characterizing high numerical aperture microscope objective lenses. **JUSKAITIS, R.** Optical imaging and microscopy. Springer Verlag, 2003, 21-43
- **JUSKAITIS, R. ; WILSON, T.** The measurement of the amplitude point spread function of microscope objective lenses. *Journal of Microscopy,* 1998, vol. 189, 8-11
- **KANT, R.** An analytical solution of vector diffraction for focusing optical systems. *J. Modern Optics,* 1993, vol. 40, 337-347
- **KELLER, H.E.** Objective lenses for confocal microscopy Handbook of biological confocal microscopy. Plenum Press, 1990
- Measured and computed point spread functions for an indirect water immersion objective used in three-dimensional fluorescence microscopy. **KONTOYANNIS, N.S. ; LANNI, F. et al.** Three-Dimensional Microscopy: Image Acquisition and Processing III. 1996, 34-42
- **LARKIN, K.G. ; SHEPPARD, C.J.R.** Direct method for phase retrieval from the intensity of cylindrical wave fronts. *J. Opt. Soc. Am. A,* 1999, vol. 16, 1838-1844
- **LI, Y.** The anomalous propagation of phase in the focus: a re-examination. *Opt. Comm.,* 1985, vol. 53, 359-363
- **LINFOOT, B.E. ; WOLF, E.** Phase distribution near focus in an aberration-free diffraction image. *Proc. Phys. Royal Soc. B,* 1956, vol. LXIX, 823-832
- Interferogram evaluation and wavefront techniques. **MALACARA, D. ; DE VORE, S.L.** Optical Shop Testing. Wiley, 1992
- **MAHAJAN, V.N.** Aberration theory made simple. *SPIE Optical Engineering Press,* 1991
- **MAHAJAN, V.N.** Optical imaging and aberrations. Part II Wave diffraction optics. *SPIE Optical Engineering Press,* 1991
- **MANSURIPUR, M.** Certain computational aspects of vector diffraction problems. *J. Opt. Soc. Am. A,* 1989, vol. 6, 786-805
- **MANSURIPUR, M.** Classical optics and its applications. Cambridge University Press, 2002

- **MARIAN, A.** Measurement and interpretation of the 3D amplitude point spread function of lenses and microscope objectives. PhD thesis. EPFL, 2005
- Point spread function models for digital holographic microscopy. Three-Dimensional and Multidimensional Microscopy: Image Acquisition and Processing XI. **MARIAN, A. ; DEPEURSINGE, C. et al.** Proc. SPIE. 2004, vol. 5324, 134-144
- **MARQUET, P. RAPPAZ ; B. MAGISTRETTI ; P. J. CUCHE ; E. EMERY ; Y. COLOMB T. ; DEPEURSINGE, C.** Digital holographic microscopy: a noninvasive contrast imaging technique allowing quantitative visualization of living cells with subwavelength axial accuracy. *Opt. Lett.,* 2005, vol. 30, 468-470
- **MCNALLY, J.G. et al.** Artifacts in computational optical microscopy. *J. Opt. Soc. Am. A,* 1994, vol. 11, 1056-1067
- **MCNALLY, J.G. et al.** Three-dimensional imaging by deconvolution microscopy. *Methods,* 1999, vol. 19, 373-385
- **MILLS, J.P ; THOMPSON, B.J.** Effect of aberrations and apodization on the performance of coherent optical systems. I. The amplitude impulse response. *J. Opt. Soc. Am. A,* 1986, vol. 3, 694-703
- **PEDRINI, G. et al.** Aberration compensation in digital holographic reconstruction of microscopic objects. *J. Mod. Opt.,* 2001, vol. 48, 1035-1041
- **PREZA, C. et al.** Point-spread sensitivity analysis for computational optical-sectioning microscopy. *Micron and Microscopica Acta,* 1992, vol. 23, 501-513
- **RICHARDS, B. ; E. WOLF, E.** Electromagnetic diffraction in optical systems II. Structure of the image field in an aplanatic system. *Proc. Royal Soc. A,* 1959, vol. 253, 358-379
- **SCHNARS, U. ; JUEPTNER, W.P.O.** Digital recording and numerical reconstruction of holograms. *Measurement Science and Technology,* 2002, vol. 13, R85-R101
- **SCHRADER, M. ; HELL, S.W.** Wavefronts in the focus of a light microscope. *Journal of Microscopy,* 1996, vol. 184, 143-148
- **SELLIGSON, J.L.** Phase measurement in the focal region of an aberrated lens. PhD thesis. University of Rochester, 1981
- **SHAW, P. ; RAWLINS, D.J.** The point-spread function of a confocal microscope: its measurement and use in deconvolution of 3-D data. *Journal of Microscopy,* 1991, vol. 163, 151-165
- Microscope objectives. **BENFORD, J.R.** Applied Optics and Engineering. Academic Press, 1965, vol. 3
- **SHEPPARD, C.J.R.** Validity of the Debye approximation. *Opt. Lett.,* 2000, vol. 25, 1660-1662
- **STADELMAIER, A. ; MASSIG, J.H.** Compensation of lens aberrations in digital holography. *Opt. Lett.,* 2000, vol. 25, 1630-1632
- **TÖRÖK P. ; FU-JEN, K.** Point-spread function reconstitution in high aperture lenses focusing ultra-short laser pulses. *Opt. Comm.,* 2002, vol. 213, 97-102
- **TÖRÖK, P.** Focusing of electromagnetic waves through dielectric interfaces: theory and correction of aberration. *Optical Memory and Neural Networks,* 1999, vol. 8, 9-24
- **TÖRÖK, P. ; VARGA, P.** Electromagnetic diffraction of light focused through a stratified medium. *Appl. Opt.,* 1997, vol. 36, 2305-2312
- **TÖRÖK, P. ; VARGA, P.** Electromagnetic diffraction of light focused through a planar interface between materials of mismatched refractive indices: an integral representation. *J. Opt. Soc. Am. A,* 1995, vol. 12, 325-332
- **WALDMAN GS ; WOOTTON JR ; HOLDER D.** Imaging transfer function in the Fresnel approximation. *Optical Engineering,* 1995, vol. 34 (6), 1818-1825
- **WALFORD, J.N. et al.** High-resolution phase imaging of phase singularities in the focal region of a lens. *Opt. Let.,* 2002, vol. 27, 345-347
- **WOLF, E. ; LI, Y.** Conditions for the validity of the Debye integral representations of focused fields. *Opt. Commun.,* 1981, vol. 39, 205-210
- **WOLF, E.** Electromagnetic diffraction in optical systems I. An integral representation of the image field. *Proc. Royal Soc. A,* 1959, vol. 253, 349-357